# EUROPEAN PATENT APPLICATION

(11) **EP 4 601 349 A1**
(43) Date of publication of application: **13.08.2025**
(21) Application number: 23864649.1
(22) Date of filing: 11.09.2023
(51) Int. Cl.: H04W 24/02

(54) **METHOD AND APPARATUS USED IN COMMUNICATION NODE FOR WIRELESS COMMUNICATION**

(30) Priority: 16.09.2022 CN 202211129317
(71) Applicant: Apogee Networks, LLC, Dallas, TX 75201 (US)
(72) Inventor: YU, Qiaoling, Shanghai 201206 (CN); ZHANG, Xiaobo, Shanghai 201206 (CN)
(74) Representative: Gunzelmann, Rainer
(86) International application number: PCT/CN2023/117911
(87) International publication number: WO 2024/055917

(57) **Abstract**

Disclosed in the present application are a method and apparatus used in a communication node for wireless communication. A communication node receives a first expiration value; maintains a first timer; and in response to the occurrence of a first event, indicates expiration of the first timer from a MAC sublayer to an upper layer; the first expiration value is used for determining the expiration time of the first timer. The behavior of maintaining the first timer comprises: starting or restarting the first timer in response to the occurrence of any event in a second event set, the second event set comprising two events, namely any MAC entity receiving a MAC SDU of a DTCH logical channel and any MAC entity sending a MAC SDU of a DTCH logical channel. The first event comprises the expiration of the first timer. The first event depends on a state of a first data packet set, or, the behavior of maintaining the first timer comprises: determining a state of the first timer according to the state of the first data packet set.

## Description

### Technical Field

The present application relates to transmission methods and apparatuses in wireless communication systems, and relates to methods and apparatuses for high data rate services, especially for XR services.

### Background Art

In the future, the application scenarios of wireless communication systems will become more and more diversified, and different application scenarios will put different performance requirements on the system. In order to meet the different performance needs of various application scenarios, it was decided to study the new radio (NR) technology at the 3GPP (3rd Generation Partner Project) RAN (Radio Access Network) #72 plenary meeting, the 3GPP RAN #75 plenary meeting approved the WI (Work Item) of NR (New Radio), and the standardization work of NR began.

### Summary of the Invention

In current protocols, if user equipment (UE) is configured with data inactive monitoring functionality in an RRC_CONNECTED state, when dataInactivityTimer expires, it is indicated, to an uplayer, that dataInactivityTimer expires, and when an RRC sublayer receives the indication that the dataInactivityTimer expires, the RRC sublayer enters an RRC_IDLE state. XR services comprise VR (virtual reality) services, AR (augmented reality) and CG (cloud gaming) services, have high-speed and low-latency characteristics, and are also interactive services that have strict requirements on response time of the services; for example, gesture information of a user is transmitted to a server, and a picture fed back by the server needs to be presented to a terminal of the user in a very short time, otherwise the user will feel an obvious latency, and the experience of the user is affected. XR services comprise various data, such as video, audio, data used for controlling various sensors, etc., and these kinds of information have certain dependency relationships. An existing data inactive monitoring mechanism cannot meet the needs of XR services, so the data inactive monitoring mechanism needs to be enhanced.

In response to the above problems, the present application provides a solution for reporting data amounts. In the description of above problems, XR services are used as an example; the present application is also applicable to scenarios such as other high data rate services; further, although the present application provides specific implementations for XR, the present application can also be used in scenarios such as LTE to achieve technical effects similar to MT-SDT in an RRC inactive state. further, although the original intention of the present application is to target Uu air interface, the present application can also be used for PC5 interfaces. Further, although the original intention of the present application is to target terminal and base station scenarios, the present application is also applicable to V2X (Vehicle-to-Everything) scenarios, and communication scenarios between terminals and relays, as well as between relays and base stations, achieving similar technical effects in the terminal and base station scenarios. Further, although the original intention of the present application is to target terminal and base station scenarios, the present application is also applicable to IAB (Integrated Access and Backhaul) communication scenarios, achieving similar technical effects in terminal and base station scenarios. Further, although the original intention of the present application is to target the Terrestrial Network scenario, the present application is also applicable to Non-Terrestrial Network (NTN) communication scenarios, achieving similar technical effects in TN scenarios. In addition, adopting a unified solution in different scenarios can also help reduce hardware complexity and costs.

As one embodiment, the explanation of the terminology in the present application refers to the definition in the TS36 series of the specification protocol of 3GPP.

As one embodiment, the explanation of the terminology in the present application refers to the definition in the TS38 series of the specification protocol of 3GPP.

As one embodiment, the explanation of the terminology in the present application refers to the definitions in the TS37 series of the specification protocol of 3GPP.

As one embodiment, the explanation of the terminology in the present application refers to the definition in the specification protocol of IEEE (Institute of Electrical and Electronics Engineers).

It should be noted that in case of no conflict, the embodiments and features in the embodiments in any node of the present application may be applied to any other node. In the case of no conflict, the embodiments and the features in the embodiments in the present application can be arbitrarily combined with each other.

The present application discloses a method used in a first node for wireless communication, characterized by comprising:
determining a state of a first data packet set according to a state of a second timer; wherein the behavior of determining a state of a first data packet set according to a state of a second timer comprises: when at least the second timer is running, the first data packet set is in progress; and when the second timer is not running, the first data packet set is not in progress.

According to one aspect of the present application, it is characterized by comprising:
receiving a first expiration value; maintaining a first timer; and in response to the occurrence of a first event, indicating expiration of the first timer from a MAC (Medium Access Control) sublayer to an upper layer;
wherein the first expiration value is used for determining the expiration time of the first timer; the behavior of maintaining the first timer comprises: starting or restarting the first timer in response to the occurrence of any event in a second event set; the second event set comprising two events, namely any MAC entity receiving a MAC SDU (Service Data Unit) of a DTCH (Dedicated Traffic Channel) logical channel and any MAC entity sending a MAC SDU of a DTCH logical channel; the first event comprises expiration of the first timer; the first event depends on a state of the first data packet set, or, the behavior of maintaining the first timer comprises: determining a state of the first timer according to the state of the first data packet set.

The present application discloses a method used in a first node for wireless communication, characterized by comprising:
receiving a first expiration value;
maintaining a first timer; and in response to the occurrence of a first event, indicating the expiration of the first timer from a MAC sublayer to an upper layer;
wherein the first expiration value is used for determining the expiration time of the first timer; the behavior of maintaining the first timer comprises: starting or restarting the first timer in response to the occurrence of any event in a second event set; the second event set comprising two events, namely any MAC entity receiving a MAC SDU of a DTCH logical channel and any MAC entity sending a MAC SDU of a DTCH logical channel; and the first event comprises the expiration of the first timer.

As one embodiment, the first event depends on a state of a first data packet set.

As one embodiment, the behavior of maintaining the first timer comprises: determining a state of the first timer according to a state of the first data packet set.

As one embodiment, the problem to be solved by the present application comprises: how to maintain the state of the first timer.

As one embodiment, the problem to be solved by the present application comprises: how to avoid transmission interruption of a first data packet set.

As one embodiment, the problem to be solved by the present application comprises: how to avoid entering an RRC_IDLE state.

As one embodiment, the characteristics of the above-mentioned method comprise: determining whether to indicate the expiration of the first timer from a MAC sublayer to an upper layer according to the state of the first data packet set.

As one embodiment, the characteristics of the above-mentioned method comprise: the first event comprises that the first data packet set is not in progress.

As one embodiment, the characteristics of the above-mentioned method comprise: if the first timer expires and at least the first data packet set is not in progress, indicating the expiration of the first timer from a MAC sublayer to an upper layer; otherwise, the expiration of the first timer is not to be indicated from the MAC sublayer to the upper layer.

As one embodiment, the characteristics of the above-mentioned method comprise: determining a state of the first timer according to a state of a first data packet set.

As one embodiment, the above-mentioned method features comprise: if the first data packet set is in progress, stopping the first timer.

As one embodiment, the characteristics of the above-mentioned method comprise: if the first data packet set is discarded, starting or restarting the first timer.

As one embodiment, the benefits of the above-mentioned method comprise: avoiding transmission interruption of a first data packet set.

As one embodiment, the benefits of the above-mentioned method comprise: avoiding entering an RRC_IDLE state.

As one embodiment, the benefits of the above-mentioned method comprise: avoiding data transmission failure.

As one embodiment, the benefits of the above-mentioned method comprise: improving QoS (Quality of Service) of services associated with a first data packet set.

According to one aspect of the present application, it is characterized by comprising:
receiving a second expiration value;
wherein the second expiration value is used for determining the expiration time of the first timer; the behavior of determining a state of the first timer according to the state of the first data packet set comprises: determining whether the first timer is set to the first expiration value or the second expiration value according to the state of the first data packet set.

As one embodiment, the characteristics of the above-mentioned method comprise: configuring the first expiration value and the second expiration value for the first timer.

As one embodiment, the benefits of the above-mentioned method comprise: avoiding premature release of an RRC connection.

As one embodiment, the benefits of the above-mentioned method comprise: matching the first timer to the service type.

According to one aspect of the present application, it is characterized in that a state of the first data packet set depends on a state of the second timer; the phrase "the state of the first data packet set depends on a state of the second timer" comprises: the second timer being running is used for determining that the first data packet set is in progress; and the second timer being not running is used for determining that the first data packet set is not in progress.

As one embodiment, the problem to be solved by the present application comprises: how to determine a state of the first data packet set.

As one embodiment, the characteristics of the above-mentioned method comprise: determining a state of the first data packet set according to a state of the second timer.

As one embodiment, the benefits of the above-mentioned method comprise: avoiding excessive inter-layer interactions.

As one embodiment, the benefits of the above-mentioned method comprise: simple implementation of the protocol.

As one embodiment, the benefits of the above-mentioned method comprise: effectively determining the state of the first data packet set.

According to one aspect of the present application, it is characterized by comprising:
sending a first MAC CE (Control Element);
wherein the first MAC CE indicates a first data amount and a first time length.

As one embodiment, with the first MAC CE, the second timer is started or restarted.

As one embodiment, the second timer is used for setting the first time length.

According to one aspect of the present application, it is characterized by comprising:
in response to expiration of the second timer, starting or restarting the first timer.

According to one aspect of the present application, it is characterized by comprising:
in response to expiration of the second timer, discarding ongoing data packets in the first data packet set.

According to one aspect of the present application, it is characterized by comprising:
starting or restarting the first timer as the second timer is started or restarted.

According to one aspect of the present application, it is characterized by comprising:
receiving a second time length, the second time length being used for determining expiration time of the second timer;
and starting or restarting the second timer at a beginning moment of a first cycle,
wherein the first cycle is used for determining the arrival time of at least one data packet in the first data packet set.

The present application discloses a method used in a second node for wireless communication, characterized by comprising:
sending a first expiration value,
wherein a recipient of the first expiration value maintains a first timer; in response to the occurrence of a first event, the recipient of the first expiration value indicates the expiration of the first timer from a MAC sublayer to an upper layer; the first expiration value is used for determining expiration time of the first timer; wherein the behavior of the recipient of the first expiration value maintaining the first timer comprises: the recipient of the first expiration value starting or restarting the first timer in response to the occurrence of any event in a second event set; the second event set comprising two events, namely any MAC entity receiving a MAC SDU of a DTCH logical channel and any MAC entity sending a MAC SDU of a DTCH logical channel; and the first event comprises the expiration of the first timer.

As one embodiment, the first event depends on a state of a first data packet set.

As one embodiment, the behavior of a recipient of the first expiration value maintaining the first timer comprises: the recipient of the first expiration value determining a state of the first timer according to a state of the first data packet set.

According to one aspect of the present application, it is characterized in that a second expiration value is sent;
wherein the second expiration value is used for determining the expiration time of the first timer; the behavior of determining a state of the first timer according to the state of the first data packet set comprises: determining whether the first timer is set to the first expiration value or the second expiration value according to the state of the first data packet set.

According to one aspect of the present application, it is characterized in that a state of the first data packet set depends on a state of the second timer; the phrase "the state of the first data packet set depends on a state of the second timer" comprises: the second timer being running is used for determining that the first data packet set is in progress; and the second timer being not running is used for determining that the first data packet set is not in progress.

According to one aspect of the present application, it is characterized by comprising:
receiving a first MAC CE;
wherein the first MAC CE indicates a first data amount and a first time length.

As one embodiment, as the first MAC CE is received, a recipient of the first expiration value starts or restarts the second timer.

As one embodiment, the second timer is used for setting the first time length.

According to one aspect of the present application, it is characterized in that, in response to expiration of the second timer, a recipient of the first expiration value starts or restarts the first timer.

According to one aspect of the present application, it is characterized in that, in response to expiration of the second timer, a recipient of the first expiration value discards ongoing data packets in the first data packet set.

According to one aspect of the present application, it is characterized in that a recipient of the first expiration value starts or restarts the first timer as the second timer is started or restarted.

According to one aspect of the present application, it is characterized by comprising:
sending a second time length, the second time length being used for determining expiration time of the second timer;
wherein, at a beginning moment of the first cycle, a recipient of the first expiration value starts or restarts the second timer; the first cycle is used for determining the arrival time of at least one data packet in the first data packet set.

The present application discloses a first node used for wireless communication, characterized by comprising:
a first processing machine for determining a state of the first data packet set according to the state of the second timer; wherein the behavior of determining a state of a first data packet set according to a state of a second timer comprises: when at least the second timer is running, the first data packet set is in progress; and when the second timer is not running, the first data packet set is not in progress.

The present application discloses a first node used for wireless communication, characterized by comprising:
a first processing machine receiving a first expiration value; maintaining a first timer; and in response to the occurrence of a first event, indicating the expiration of the first timer from a MAC sublayer to an upper layer;
wherein the first expiration value is used for determining the expiration time of the first timer; the behavior of maintaining the first timer comprises: starting or restarting the first timer in response to the occurrence of any event in a second event set; the second event set comprising two events, namely any MAC entity receiving a MAC SDU of a DTCH logical channel and any MAC entity sending a MAC SDU of a DTCH logical channel; and the first event comprises the expiration of the first timer.

As one embodiment, the first event depends on a state of a first data packet set.

As one embodiment, the behavior of maintaining the first timer comprises: determining a state of the first timer according to a state of the first data packet set.

The present application discloses a second node used for wireless communication, characterized by comprising:
a second transmitter sending a first expiration value;
wherein a recipient of the first expiration value maintains a first timer; in response to the occurrence of a first event, the recipient of the first expiration value indicates the expiration of the first timer from a MAC sublayer to an upper layer; the first expiration value is used for determining expiration time of the first timer; wherein the behavior of the recipient of the first expiration value maintaining the first timer comprises: the recipient of the first expiration value starting or restarting the first timer in response to the occurrence of any event in a second event set; the second event set comprising two events, namely any MAC entity receiving a MAC SDU of a DTCH logical channel and any MAC entity sending a MAC SDU of a DTCH logical channel; and the first event comprises the expiration of the first timer.

As one embodiment, the first event depends on a state of a first data packet set.

As one embodiment, the behavior of a recipient of the first expiration value maintaining the first timer comprises: the recipient of the first expiration value determining a state of the first timer according to a state of the first data packet set.

As one embodiment, compared with the traditional solution, the present application has the following advantages:
- . avoiding interrupting transmission of a first data packet set;
- . avoiding entering an RRC_IDLE state;
- . avoiding data transmission failures;
- . improving QoS of services associated with a first data packet set.

### Brief Description of the Drawings

Other features, objects and advantages of the present application will become more apparent by reading the detailed description of non-limiting embodiments with reference to the following drawings:
FIG. 1 shows a flowchart of transmission of a first expiration value according to one embodiment of the present application;
FIG. 2 shows a schematic diagram of a network architecture according to one embodiment of the present application;
FIG. 3 shows a schematic diagram of an embodiment of a wireless protocol architecture of a user plane and a control plane according to one embodiment of the present application;
FIG. 4 shows a schematic diagram of a first communication device and a second communication device according to one embodiment of the present application;
FIG. 5 shows a flowchart of wireless signal transmission according to one embodiment of the present application;
FIG. 6 shows a schematic diagram of a state of a first data packet set depending on a state of a second timer according to one embodiment of the present application;
FIG. 7 shows a flowchart of wireless signal transmission according to another embodiment of the present application;
FIG. 8 shows a schematic diagram of starting or restarting a first timer according to one embodiment of the present application;
FIG. 9 shows a schematic diagram of discarding ongoing data packets in a first data packet set according to one embodiment of the present application;
FIG. 10 shows a schematic diagram of starting or restarting a first timer according to another embodiment of the present application;
FIG. 11 shows a flowchart of wireless signal transmission according to a further embodiment of the present application;
FIG. 12 shows a structural block diagram of a processing apparatus for a first node according to one embodiment of the present application; and
FIG. 13 shows a structural block diagram of a processing apparatus for a second node according to one embodiment of the present application.

### Detailed Description of Embodiments

The technical solution of the present application will be further described in detail below in conjunction with the accompanying drawings. It should be noted that the embodiments and features in the embodiments in the present application can be arbitrarily combined with each other in case of no conflict.

### Embodiment 1

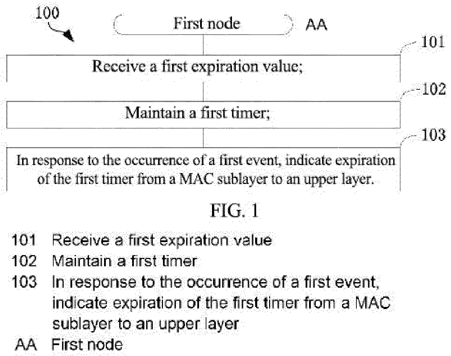

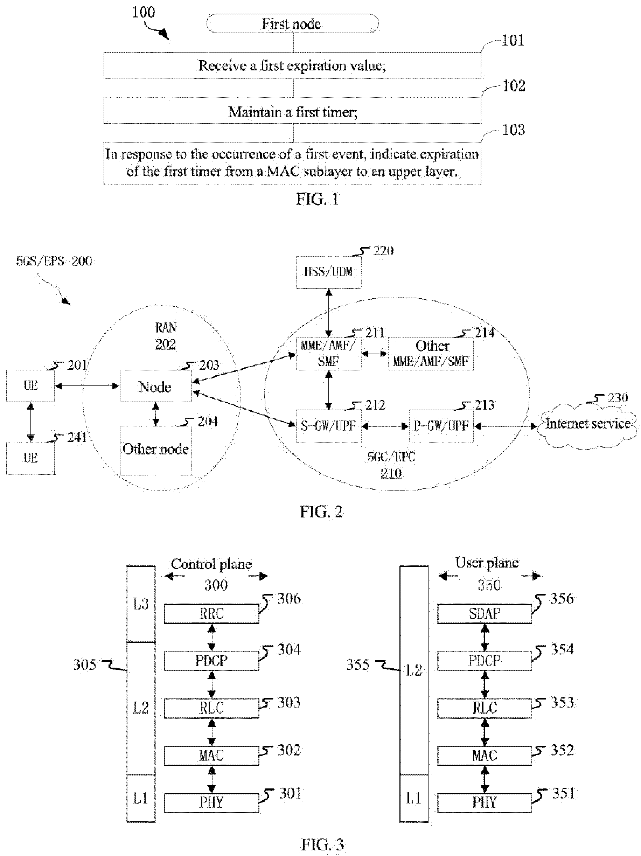

Embodiment 1 illustrates a flowchart of transmission of a first expiration value according to one embodiment of the present application, as shown in FIG. 1. In FIG. 1, each block represents one step. It should be specifically emphasized that the sequence of blocks in the figure does not indicate temporal ordering of the represented steps.

In Embodiment 1, a first node in the present application receives a first expiration value in step 101; maintains a first timer in step 102; and in response to the occurrence of a first event, indicates the expiration of the first timer from a MAC sublayer to an upper layer in step 103; wherein the first expiration value is used for determining the expiration time of the first timer; the behavior of maintaining the first timer comprises: starting or restarting the first timer in response to the occurrence of any event in a second event set; the second event set comprising two events, namely any MAC entity receiving a MAC SDU of a DTCH logical channel and any MAC entity sending a MAC SDU of a DTCH logical channel; and the first event comprises the expiration of the first timer.

As one embodiment, the first event depends on a state of a first data packet set.

As one embodiment, the behavior of maintaining the first timer comprises: determining a state of the first timer according to a state of the first data packet set.

As one embodiment, the first node is in an RRC_CONNECTED state.

As one embodiment, the first node is in an RRC_INACTIVE state.

As one embodiment, the first node is configured with data inactive monitoring functionality.

As one embodiment, the first node is configured with the first timer.

As one embodiment, the first expiration value is not related to whether the first data packet set is in progress.

As one embodiment, the first expiration value is related to whether the first data packet set is in progress.

As one embodiment, the first timer is set to the first expiration value regardless of whether the first data packet set is in progress.

As one embodiment, the first expiration value is configured.

As one embodiment, the first expiration value is configurable.

As one embodiment, the first expiration value is preconfigured.

As one embodiment, the first expiration value is XR-specific.

As one embodiment, the first expiration value is not XR-specific.

As one embodiment, the first expiration value comprises a limited number of time units.

As one embodiment, the first expiration value comprises at least 1 time unit.

As one embodiment, the first expiration value comprises at least 0.5 time unit.

As one embodiment, the quantity of time units included in the first expiration value is configurable.

As one embodiment, the quantity of time units included in the first expiration value is preconfigured.

As one embodiment, the time unit is 0.5 second.

As one embodiment, the time unit is second.

As one embodiment, the time unit is millisecond.

As one embodiment, the time unit is subframe.

As one embodiment, the time unit is slot.

As one embodiment, one RRC (Radio Resource Control) field indicates the first expiration value.

As one sub-embodiment of this embodiment, the one RRC field is a DataInactivityTimer field.

As one sub-embodiment of this embodiment, a name of the one RRC field comprises DataInactivityTimer.

As one sub-embodiment of this embodiment, the one RRC field belongs to MAC-CellGroupConfig IE.

As one sub-embodiment of this embodiment, the one RRC field belongs to MAC-CellGroupConfig IE, and the MAC-CellGroupConfig IE is configured to an MCG (Master Cell Group).

As one sub-embodiment of this embodiment, the one RRC field belongs to CellGroupConfig IE, and the CellGroupConfig IE is configured to an MCG.

As one sub-embodiment of this embodiment, the one RRC field belongs to an RRCReconfiguration message.

As one sub-embodiment of this embodiment, the RRC field belongs to an RRCResume message.

As one sub-embodiment of this embodiment, the one RRC field belongs to an RRCSetup message.

As one embodiment, the first expiration value is used for determining expiration time of the first timer only when the first timer is set to the first expiration value.

As one embodiment, "the running time of the first timer reaches the first expiration value" is used for determining the expiration of the first timer.

As one embodiment, expiration time of the first timer is the time when the running time of the first timer reaches the first expiration value.

As one embodiment, a time interval between the expiration time of the first timer and the time when the first timer is started or restarted is not smaller than the first expiration value.

As one embodiment, the first timer is maintained in the RRC_CONNECTED state.

As one embodiment, the first timer is maintained in the RRC_INACTIVE state.

As one embodiment, the first expiration value is received in the RRC_CONNECTED state, and the first timer is maintained in the RRC_CONNECTED state.

As one embodiment, the first expiration value is received in the RRC_CONNECTED state, and the first timer is maintained in the RRC_INACTIVE state.

As one embodiment, the first expiration value is received in the RRC_INACTIVE state, and the first timer is maintained in the RRC_INACTIVE state.

As one embodiment, the behavior of maintaining the first timer comprises: determining a state of the first timer.

As one embodiment, the behavior of maintaining the first timer comprises: starting the first timer.

As one embodiment, the behavior of maintaining the first timer comprises: restarting the first timer.

As one embodiment, the behavior of maintaining the first timer comprises: determining the expiration of the first timer.

As one embodiment, the behavior of maintaining the first timer comprises: stopping the first timer.

As one embodiment, the behavior of maintaining the first timer does not comprise: stopping the first timer.

As one embodiment, the behavior of maintaining the first timer comprises: pausing the first timer.

As one embodiment, the behavior of maintaining the first timer does not comprise: pausing the first timer.

As one embodiment, the first timer is XR-specific.

As one embodiment, the first timer is not XR-specific.

As one embodiment, a name of the first timer comprises dataInactivityTimer.

As one embodiment, the first timer is dataInactivityTimer.

As one embodiment, the first timer performs positive timing.

As one embodiment, an initial value of the first timer is 0.

As one embodiment, the first timer progressively increases from 0 after being started.

As one embodiment, the first timer counts down.

As one embodiment, an initial value of the first timer is a first expiration value.

As one embodiment, the first timer progressively decreases from the first expiration value after being started.

As one embodiment, the phrase "in response to the occurrence of a first event" comprises: when the first event occurs.

As one embodiment, the phrase "in response to the occurrence of a first event" comprises: if the first event occurs.

As one embodiment, the phrase "in response to the occurrence of a first event" comprises: once the first event occurs.

As one embodiment, the upper layer comprises a protocol layer above the MAC sublayer.

As one embodiment, the upper layer comprises an RRC sublayer.

As one embodiment, the upper layer comprises a PDCP (Packet Data Convergence Protocol) sublayer.

As one embodiment, the upper layer comprises an RLC (Radio Link Control) sublayer.

As one embodiment, the upper layer only comprises one protocol layer.

As one embodiment, the upper layer comprises a plurality of protocol layers.

As one embodiment, the expiration of the first timer is indicated from the MAC sublayer of the first node to the upper layer of the first node.

As one embodiment, the expiration of the first timer is indicated from the MAC sublayer to the upper layer through an inter-layer interface.

As one embodiment, the expiration of the first timer is indicated directly from the MAC sublayer to an RRC sublayer.

As one embodiment, the expiration of the first timer is firstly indicated from the MAC sublayer to an RLC sublayer, then the expiration of the first timer is indicated from the RLC sublayer to a PDCP sublayer, and then the expiration of the first timer is indicated from the PDCP sublayer to an RRC sublayer.

As one embodiment, the first timer being equal to the first expiration value is used for determining the expiration of the first timer; the first timer performs positive timing.

As one embodiment, when the first timer is equal to the first expiration value, the first timer expires; the first timer performs positive timing.

As one embodiment, the first timer being equal to 0 is used for determining the expiration of the first timer; and the first timer counts down.

As one embodiment, when the first timer is equal to 0, the first timer expires; and the first timer counts down.

As one embodiment, RRC connection is released in response to receiving an indication of the expiration of the first timer from a lower layer at the RRC sublayer.

As one embodiment, an RRC_IDLE state is entered in response to receiving an indication of the expiration of the first timer from a lower layer at the RRC sublayer.

As one embodiment, in response to receiving an indication of the expiration of the first timer from a lower layer at the RRC sublayer, an action of entering an RRC_IDLE state is performed, and the RRC_IDLE state is entered.

As one embodiment, in response to receiving an indication of the expiration of the first timer from a lower layer at the RRC sublayer, an RRC_IDLE state is entered, and a release cause is set to RRC connection failures.

As one embodiment, a MAC entity is reset in response to receiving an indication of the expiration of the first timer from a lower layer at the RRC sublayer.

As one sub-embodiment of this embodiment, the lower layer comprises a protocol layer below the RRC sublayer.

As one sub-embodiment of this embodiment, the lower layer comprises the PDCP sublayer.

As one embodiment, the upper layer comprises the RLC sublayer.

As one sub-embodiment of this embodiment, the lower layer comprises the MAC sublayer.

As one sub-embodiment of this embodiment, the lower layer only comprises one protocol layer.

As one sub-embodiment of this embodiment, the lower layer comprises a plurality of protocol layers.

As one embodiment, the first event comprises the expiration of at least the first timer.

As one embodiment, the first event only comprises the expiration of the first timer.

As one embodiment, the first event is the expiration of the first timer.

As one embodiment, the phrase "in response to the occurrence of any event in a second event set" comprises: when any event in the second event set occurs.

As one embodiment, the phrase "in response to the occurrence of any event in a second event set" comprises: if any event in the second event set occurs.

As one embodiment, the phrase "in response to the occurrence of any event in a second event set" comprises: once any event in the second event set occurs.

As one embodiment, the behavior of starting or restarting the first timer comprises: starting the first timer.

As one embodiment, the behavior of starting or restarting the first timer comprises: restarting the first timer.

As one embodiment, the behavior of starting or restarting the first timer comprises: starting the first timer if the first timer is not running; and restarting the first timer if the first timer is running.

As one embodiment, the behavior of restarting the first timer comprises: enabling the first timer to begin timing again.

As one embodiment, the behavior of restarting the first timer comprises: setting the first timer to an initial value of the first timer.

As one embodiment, one event in the second event set is any MAC entity receiving a MAC SDU of a DTCH logical channel.

As one embodiment, one event in the second event set is that any MAC entity receives a MAC SDU of a DCCH (Dedicated Control Channel) logical channel.

As one embodiment, one event in the second event set is that any MAC entity receives a MAC SDU of a CCCH (Common Control Channel) logical channel.

As one embodiment, one event in the second event set is that any MAC entity receives a MAC SDU of a MTCH (MBS (Multicast/Broadcast Service) Traffic Channel) logical channel.

As one embodiment, one event in the second event set is that any MAC entity sends a MAC SDU of a DTCH logical channel.

As one embodiment, one event in the second event set is that any MAC entity receives a MAC SDU of a DCCH logical channel.

As one embodiment, one event in the second event set comprises: any MAC entity receives a MAC SDU of a DTCH logical channel.

As one embodiment, one event in the second event set comprises: any MAC entity receives a MAC SDU of a DCCH logical channel.

As one embodiment, one event in the second event set comprises: any MAC entity receives a MAC SDU of a CCCH logical channel.

As one embodiment, one event in the second event set comprises: any MAC entity receives a MAC SDU of an MTCH logical channel.

As one embodiment, one event in the second event set comprises: any MAC entity sends a MAC SDU of a DTCH logical channel.

As one embodiment, one event in the second event set comprises: any MAC entity receives a MAC SDU of a DCCH logical channel.

As one embodiment, when any MAC entity receives a MAC SDU of a DTCH logical channel or a DCCH logical channel or a CCCH logical channel or an MTCH logical channel, or when any MAC entity sends a MAC SDU of a DTCH logical channel or a DCCH logical channel, the first timer is started or restarted.

As one embodiment, the any MAC entity is configured to the first node.

As one embodiment, the any MAC entity is any MAC entity configured to the first node.

As one embodiment, the any MAC entity is a MAC entity of the first node.

As one embodiment, the any MAC entity is a MAC entity corresponding to MCG; and the first node is not configured with an SCG (Secondary Cell Group).

As one embodiment, the any MAC entity is a MAC entity corresponding to MCG; and the first node is configured with an SCG.

As one embodiment, the any MAC entity is a MAC entity corresponding to SCG; the first node is configured with an SCG.

As one embodiment, the any MAC entity is any one of a MAC entity corresponding to MCG or a MAC entity corresponding to SCG; the first node is configured with an SCG.

As one embodiment, the phrase "the first event depends on a state of the first data packet set" comprises: the first event comprises that the first data packet set is not in progress.

As one sub-embodiment of this embodiment, the first event comprises that the first timer expires and the first data packet set is not in progress.

As one sub-embodiment of this embodiment, the first event is that the first timer expires and the first data packet set is not in progress.

As one embodiment, only when the first timer expires and the first data packet set is not in progress, the expiration of the first timer is indicated from a MAC sublayer to an upper layer.

As one embodiment, if the first timer expires and the first data packet set is in progress, the expiration of the first timer is not to be indicated from a MAC sublayer to an upper layer.

As one embodiment, the first event depends on a state of a plurality of data packet sets; the first data packet set is one data packet set in the plurality of data packet sets.

As one sub-embodiment of this embodiment, the phrase "the first event depends on a state of the plurality of data packet sets" comprises: the first event depends on a state of each data packet set in the plurality of data packet sets.

As one sub-embodiment of this embodiment, the phrase "the first event depends on a state of the plurality of data packet sets" comprises: the first event depends on a state of at least one data packet set in the plurality of data packet sets.

As one sub-embodiment of this embodiment, the phrase "the first event depends on a state of the plurality of data packet sets" comprises: the first event depends on a state of at least the first data packet set in the plurality of data packet sets.

As one sub-embodiment of this embodiment, the phrase "the first event depends on a state of the plurality of data packet sets" comprises: the first event comprises each data packet set in the plurality of data packet sets being not in progress.

As one sub-embodiment of this embodiment, the phrase "the first event depends on a state of the plurality of data packet sets" comprises: the first event comprises all data packet sets in the plurality of data packet sets being not in progress.

As one sub-embodiment of this embodiment, the phrase "the first event depends on a state of the plurality of data packet sets" comprises: the first event comprises: any ongoing data packet set does not exist in the plurality of data packet sets.

As one sub-embodiment of this embodiment, the first event comprises that the first timer expires and each data packet set in the plurality of data packet sets is not in progress.

As one sub-embodiment of this embodiment, the first event comprises that the first timer expires and any ongoing data packet set does not exist.

As one sub-embodiment of this embodiment, the first event is that the first timer expires and each data packet set in the plurality of data packet sets is not in progress.

As one sub-embodiment of this embodiment, the first event is that the first timer expires and any ongoing data packet set does not exist.

As one embodiment, the first event is that the first timer expires; The first event does not depend on a state of the first data packet set.

As one embodiment, a state of the first timer is determined according to a state of a plurality of data packet sets; and the first data packet set is one data packet set in the plurality of data packet sets.

As one sub-embodiment of this embodiment, the behavior of determining a state of the first timer according to a state of the plurality of data packet sets comprises: determining the state of the first timer according to a state of each data packet set in the plurality of data packet sets.

As one sub-embodiment of this embodiment, the behavior of determining a state of the first timer according to a state of the plurality of data packet sets comprises: determining the state of the first timer according to a state of at least one data packet set in the plurality of data packet sets.

As one sub-embodiment of this embodiment, the behavior of determining a state of the first timer according to a state of the plurality of data packet sets comprises: determining the state of the first timer according to a state of any data packet set in the plurality of data packet sets.

As one sub-embodiment of this embodiment, the first event is that the first timer expires; and the first event does not depend on a state of any data packet set in the plurality of data packet sets.

As one embodiment, in response to the occurrence of any event in the second event set, the first timer is started or restarted only when the first data packet set is not in progress.

As one embodiment, in response to the occurrence of any event in the second event set and the first data packet set is not in progress, the first timer is started or restarted.

As one embodiment, in response to the occurrence of one event in the second event set, if the first data packet set is in progress, the first timer is stopped.

As one embodiment, in response to the occurrence of any event in the second event set and the first data packet set is in progress, the first timer is stopped.

As one embodiment, in response to the occurrence of one event in the second event set and the first data packet set is in progress, the first timer is stopped.

As one embodiment, one event in the second event set comprises: any MAC entity receives a MAC SDU of a DTCH logical channel.

As one embodiment, one event in the second event set comprises: any MAC entity receives a MAC SDU of a DCCH logical channel.

As one embodiment, one event in the second event set comprises: any MAC entity receives a MAC SDU of a CCCH logical channel.

As one embodiment, one event in the second event set comprises: any MAC entity receives a MAC SDU of an MTCH logical channel.

As one embodiment, one event in the second event set comprises: any MAC entity sends a MAC SDU of a DTCH logical channel.

As one embodiment, one event in the second event set comprises: any MAC entity receives a MAC SDU of a DCCH logical channel.

As one embodiment, as long as the first data packet set is in progress, the first timer is not to be started and is not to be restarted; and a state of the first timer is determined according to a state of the first data packet set.

As one embodiment, the first data packet set is transmitted, and the first timer is not running; and a state of the first timer is determined according to a state of the first data packet set.

As one embodiment, in response to that a first data packet in the first data packet set is transmitted, the first timer is stopped.

As one embodiment, in response to that a first data packet in the first data packet set is submitted to a lower layer, the first timer is stopped.

As one embodiment, in response to that a first data packet in the first data packet set is transmitted, the first time length is indicated to a lower layer.

As one embodiment, in response to that a data packet in the first data packet set is transmitted, the first time length is indicated to a lower layer.

As one embodiment, in response to that any data packet in the first data packet set is transmitted, the first time length is indicated to a lower layer.

As one embodiment, in response to an indication of receiving the first time length at a MAC sublayer, the first timer is stopped.

As one embodiment, in response to receiving an indication of the first time length at a MAC sublayer, the first timer is started or restarted.

As one embodiment, in response to receiving an indication of the first time length at a MAC sublayer, the second timer is started or restarted.

As one embodiment, the behavior of determining a state of the first timer according to a state of the first data packet set comprises: stopping the first timer if the first data packet set is in progress.

As one embodiment, the behavior of determining a state of the first timer according to a state of a plurality of first data packet sets comprises: stopping the first timer if at least one data packet set in the plurality of data packet sets is in progress.

As one embodiment, the behavior of determining a state of the first timer according to a state of a plurality of data packet sets comprises: stopping the first timer if any data packet set in the plurality of data packet sets is in progress.

As one embodiment, the behavior of determining a state of the first timer according to a state of a plurality of data packet sets comprises: stopping the first timer if each data packet set in the plurality of data packet sets is in progress.

As one embodiment, the behavior of determining a state of the first timer according to a state of the first data packet set comprises: starting or restarting the first timer if the first data packet set is discarded.

As one embodiment, the behavior of determining a state of the first timer according to a state of a plurality of data packet sets comprises: starting or restarting the first timer if at least one data packet set in the plurality of data packet sets is discarded.

As one embodiment, the behavior of determining a state of the first timer according to a state of a plurality of data packet sets comprises: starting or restarting the first timer if any data packet set in the plurality of data packet sets is discarded.

As one embodiment, the behavior of determining a state of the first timer according to a state of a plurality of data packet sets comprises: starting or restarting the first timer if each data packet set in the plurality of data packet sets is discarded.

As one embodiment, the first event depends on a state of the first data packet set, and the behavior of maintaining the first timer does not comprise: determining a state of the first timer according to the state of the first data packet set.

As one embodiment, the first event depends on a state of the first data packet set, and the behavior of maintaining the first timer comprises: determining a state of the first timer according to a state of the first data packet set.

As one embodiment, the first event does not depend on a state of the first data packet set, and the behavior of maintaining the first timer comprises: determining a state of the first timer according to the state of the first data packet set.

As one embodiment, the first data packet set is a data packet set.

As one embodiment, the first data packet set comprises one or more data packets.

As one embodiment, the first data packet set comprises a limited number of data packets.

As one embodiment, the first data packet set comprises at least one data packet.

As one embodiment, the first data packet set comprises at least two data packets.

As one embodiment, the first data packet set is any data packet set of a MAC entity associated with the first timer.

As one embodiment, the first data packet set is any data packet set of a given MAC entity of the first node.

As one embodiment, the first data packet set is any data packet set of any MAC entity of the first node.

As one embodiment, the first data packet set is any data packet set of the first node.

As one embodiment, the first data packet set is any data packet set sent by or received by the first node.

As one embodiment, the first data packet set is associated with a PDCP entity.

As one embodiment, the first data packet set is associated with a plurality of PDCP entities.

As one embodiment, the first data packet set is not to be associated with a plurality of PDCP entities.

As one embodiment, the first data packet set is associated with only one DRB (Data Radio Bearer).

As one embodiment, the first data packet set is associated with a plurality of DRBs.

As one embodiment, the first data packet set is associated with one or more DRBs.

As one embodiment, the plurality of data packet sets comprise at least two data packet sets.

As one embodiment, the plurality of data packet sets are all data packet sets of a MAC entity associated with the first timer.

As one embodiment, the plurality of data packet sets are all data packet sets of a given MAC entity of the first node.

As one embodiment, the plurality of data packet sets are all data packet sets of any MAC entity of the first node.

As one embodiment, the plurality of data packet sets are all data packet sets of the first node.

As one embodiment, the plurality of data packet sets are all data packet sets sent by or received by the first node.

As one embodiment, the plurality of data packet sets are associated with only one DRB.

As one embodiment, the plurality of data packet sets are associated with a plurality of DRBs.

As one embodiment, the plurality of data packet sets are associated with one or more DRBs.

As one embodiment, a data packet set is a PDU set.

As one embodiment, data packets in one data packet set have a dependency relationship.

As one embodiment, "data packets in one data packet set have a dependency relationship" comprises: any two data packets in a data packet set have a dependency relationship.

As one embodiment, "data packets in one data packet set have a dependency relationship" comprises: any data packet in the one data packet set depends on at least one data packet other than the any data packet in the one data packet set.

As one embodiment, "data packets in one data packet set have a dependency relationship" comprises: decoding of any data packet in the one data packet set depends on at least one data packet other than the any data packet in the one data packet set.

As one embodiment, "data packets in one data packet set have a dependency relationship" comprises: a picture of any data packet in the data packet set depends on at least one data packet other than the any data packet in the data packet set.

As one embodiment, "data packets in one data packet set have a dependency relationship" comprises: QoS of any data packet in the one data packet set depends on at least one data packet other than the any data packet in the one data packet set.

As one embodiment, "data packets in one data packet set have a dependency relationship" comprises: all data packets in the one data packet set are used for constructing an identical picture.

As one embodiment, "data packets in one data packet set have a dependency relationship" comprises: all data packets in the one data packet set belong to an identical QoS flow.

As one embodiment, "data packets in one data packet set have a dependency relationship" comprises: there is a latency requirement for all data packets in the one data packet set.

As one embodiment, "data packets in one data packet set have a dependency relationship" comprises: a latency budget for all data packets in the one data packet set cannot exceed one threshold.

As one embodiment, each data packet in the first data packet set is an uplink data packet.

As one embodiment, each data packet in the first data packet set is a downlink data packet.

As one embodiment, each data packet in the first data packet set is a backhaul link data packet.

As one embodiment, each data packet in the first data packet set is a sidelink data packet.

In the one embodiment, at least one data packet in the first data packet set is a cached data packet.

In the one embodiment, each data packet in the first data packet set is a cached data packet.

In the one embodiment, at least one data packet in the first data packet set is an expected data packet.

In the one embodiment, each data packet in the first data packet set is an expected data packet.

As one embodiment, the first data packet set is of one data packet type in the first candidate data packet type set.

As one sub-embodiment of this embodiment, one data packet type in the first candidate packet type set is a PDCP SDU.

As one sub-embodiment of this embodiment, one data packet type in the first candidate packet type set is a PDCP Data PDU.

As one sub-embodiment of this embodiment, one data packet type in the first candidate packet type set is a PDCP Control PDU.

As one sub-embodiment of this embodiment, one data packet type in the first candidate packet type set is a PDCP SDU to be retransmitted for AM (Acknowledge Mode) DRB.

As one sub-embodiment of this embodiment, one data packet type in the first candidate packet type set is a PDCP Data PDU to be retransmitted for AM DRB.

As one sub-embodiment of this embodiment, one data packet type in the first candidate packet type set is an RLC SDU.

As one sub-embodiment of this embodiment, one data packet type in the first candidate packet type set is an RLC SDU segment.

As one sub-embodiment of this embodiment, one data packet type in the first candidate packet type set is an RLC data PDU to be initially transmitted.

As one sub-embodiment of this embodiment, one data packet type in the first candidate packet type set is an RLC data PDU to be retransmitted for RLC AM.

As one sub-embodiment of this embodiment, a data packet type in the first candidate packet type set comprises at least one of PDCP SDU, or PDCP Data PDU, or PDCP Control PDU, or PDCP SDU to be retransmitted for AM DRB, or PDCP Data PDU to be retransmitted for AM DRB, or RLC SDU, or RLC SDU segment, or RLC data PDU to be initially transmitted, or RLC data PDU to be retransmitted for RLC AM.

As one embodiment, all data packets in the first data packet set belong to an identical LCG (Logical Channel Group).

As one embodiment, there are two data packets in the first data packet set that belong to different LCGs.

As one embodiment, at least partial bits of one data packet in the first data packet set are generated by an XR server.

As one embodiment, at least partial bits of one data packet in the first data packet set are generated by an Edge server.

As one embodiment, at least partial bits of one data packet in the first data packet set are generated by a core network device.

As one embodiment, at least partial bits of one data packet in the first data packet set are generated by an access network device.

As one embodiment, one data packet in the first data packet set is a slice.

As one embodiment, one data packet in the first data packet set is a PDU (Protocol Data Unit).

As one embodiment, one data packet in the first data packet set is a load of a PDU.

As one embodiment, one data packet in the first data packet set is a PDU of a Uu interface.

As one embodiment, one data packet in the first data packet set is a PDU of a PC5 interface.

As one embodiment, one data packet in the first data packet set is a PDU of an Xn interface.

As one embodiment, one data packet in the first data packet set is a PDU on a sidelink.

As one embodiment, one data packet in the first data packet set is a PDU above an SDAP (Service Data Adaptation Protocol) layer.

As one embodiment, one data packet in the first data packet set is a PDU above a MAC sublayer.

As one embodiment, one data packet in the first data packet set is an application layer PDU.

As one embodiment, one data packet in the first data packet set is a non-access layer PDU.

As one embodiment, one data packet in the first data packet set is an RLC PDU.

As one embodiment, one data packet in the first data packet set is an RLC data PDU to be initially transmitted.

As one embodiment, one data packet in the first data packet set is an RLC data PDU to be retransmitted for RLC AM.

As one embodiment, one data packet in the first data packet set is a PDCP PDU.

As one embodiment, one data packet in the first data packet set is a PDCP Data PDU.

As one embodiment, one data packet in the first data packet set is a PDCP Data PDU to be retransmitted for AM DRB.

As one embodiment, one data packet in the first data packet set is a PDCP Control PDU.

As one embodiment, one data packet in the first data packet set is an SDAP PDU.

As one embodiment, one data packet in the first data packet set is an IP (Internet Protocol) packet.

As one embodiment, one data packet in the first data packet set is a load of an IP packet.

As one embodiment, one data packet in the first data packet set is an IP PDU.

As one embodiment, one data packet in the first data packet set is an SDU.

As one embodiment, one data packet in the first data packet set is a load of an SDU.

As one embodiment, one data packet in the first data packet set is an SDU of a Uuinterface.

As one embodiment, one data packet in the first data packet set is an SDU of a PC5 interface.

As one embodiment, one data packet in the first data packet set is an SDU of an Xn interface.

As one embodiment, one data packet in the first data packet set is an SDU on a sidelink.

As one embodiment, one data packet in the first data packet set is an SDU above an SDAP layer.

As one embodiment, one data packet in the first data packet set is an SDU on a MAC sublayer.

As one embodiment, one data packet in the first data packet set is an application layer SDU.

As one embodiment, one data packet in the first data packet set is a non-access layer SDU.

As one embodiment, one data packet in the first data packet set is an RLC SDU.

As one embodiment, one data packet in the first data packet set is an RLC SDU segment.

As one embodiment, one data packet in the first data packet set is a PDCP SDU.

As one embodiment, one data packet in the first data packet set is a PDCP SDU to be retransmitted for AM DRB.

As one embodiment, one data packet in the first data packet set is an SDAP SDU.

As one embodiment, one data packet in the first data packet set is one data packet to be retransmitted.

As one embodiment, one data packet in the first data packet set is generated by a protocol entity of a user plane.

As one embodiment, one data packet in the first data packet set only comprises data of the user plane.

As one embodiment, one data packet in the first data packet set uses DRB.

As one embodiment, one data packet in the first data packet set is a PDU of the first protocol layer.

As one embodiment, one data packet in the first data packet set is packetized at the first protocol layer.

As one embodiment, an SDU included in one data packet in the first data packet set is encapsulated, at the first protocol layer, into a PDU of the first protocol layer.

As one embodiment, an SDU of one data packet in the first data packet set is encapsulated at the first protocol layer and is added into a protocol header.

As one embodiment, all bits of one data packet in the first data packet set are generated at the first protocol layer.

As one embodiment, at least a packet header of one data packet in the first data packet set is generated at the first protocol layer.

As one embodiment, one data packet in the first data packet set is transmitted via a DRB.

As one embodiment, one data packet in the first data packet set is mapped to a DRB.

As one embodiment, at least partial bits of one data packet in the first data packet set are transmitted using a DRB.

As one embodiment, all bits of one data packet in the first data packet set are transmitted via a DRB.

As one embodiment, an SDU of one data packet in the first data packet set is a PDCP PDU.

As one embodiment, transmission resources occupied by one data packet in the first data packet set comprise a DRB.

As one embodiment, transmission resources occupied by one data packet in the first data packet set are associated with a DRB.

As one embodiment, the one field of a packet header of one data packet in the first data packet set is a D/C field.

As one embodiment, one field of a packet header of one data packet in the first data packet set indicates that a type of the any data packet of the first data packet set is data.

As one embodiment, each data packet in the first data packet set is generated by a PDCP sublayer.

As one embodiment, each data packet in the first data packet set is generated by a PDCP sublayer or an RLC sublayer.

As one embodiment, each data packet in the first data packet set is generated by an SDAP layer.

As one embodiment, each data packet in the first data packet set is generated by an IP layer.

As one embodiment, each data packet in the first data packet set is generated by a transmission layer.

As one embodiment, each data packet in the first data packet set is generated by an application layer.

As one embodiment, each data packet in the first data packet set is generated by a transmission network layer.

As one embodiment, each data packet in the first data packet set is generated by a network layer.

As one embodiment, each data packet in the first data packet set belongs to one of the PDCP sublayer or an RLC sublayer.

As one embodiment, each data packet in the first data packet set belongs to the PDCP sublayer.

As one embodiment, each data packet in the first data packet set belongs to the RLC sublayer.

As one embodiment, SDU of each data packet in the first data packet set is transmitted through DRB.

As one embodiment, each data packet in the first data packet set is transmitted through DRB.

As one embodiment, each data packet in the first data packet set is mapped to DRB.

As one embodiment, any data packet in the first data packet set does not comprise a PDU of the control plane.

As one embodiment, any data packet in the first data packet set does not comprise control signaling.

As one embodiment, any data packet in the first data packet set does not comprise RRC signaling.

As one embodiment, any data packet in the first data packet set is not a control PDU.

As one embodiment, SDU of any data packet in the first data packet set does not to be transmitted through SRB.

As one embodiment, any two data packets in the first data packet set have a dependency relationship.

As one embodiment, any two data packets in the first data packet set are mapped to an identical logical channel.

As one embodiment, there are two data packets in the first data packet set that are mapped to different LCGs.

As one embodiment, any two data packets in the first data packet set are mapped to an identical LCG.

As one embodiment, any two data packets in the first data packet set belong to an identical service.

As one embodiment, any two data packets in the first data packet set belong to an identical PDU session.

As one embodiment, any two data packets in the first data packet set are generated by an identical protocol entity.

As one embodiment, DRBs respectively used by any two data packets in the first data packet set have an association relationship.

As one embodiment, a DRB used by one data packet in the first data packet set is a DRB of an MCG, and a DRB used by another data packet in the first data packet set is a DRB of an SCG.

As one embodiment, a DRB used by at least one data packet in the first data packet set is a split DRB.

As one embodiment, each of DRBs used by any two data packets in the first data packet set is a DRB of an MCG.

As one embodiment, each of DRBs used by any two data packets in the first data packet set is a DRB of an SCG.

As one embodiment, DRBs used by any two data packets in the first data packet set are identical.

As one embodiment, there are two data packets in the first data packet set that use different DRBs.

As one embodiment, there are two data packets in the first data packet set that use different DRB IDs.

As one embodiment, any two data packets in the first data packet set are associated with an identical QoS flow.

As one embodiment, packet headers of any two data packets in the first data packet set are different.

As one embodiment, sequences of any two data packets in the first data packet set are different.

As one embodiment, logical channels occupied by any two data packets in the first data packet set are different.

As one embodiment, logical channels occupied by any two data packets in the first data packet set are identical.

As one embodiment, any two data packets in the first data packet set are processed by an identical MAC entity.

As one embodiment, any two data packets in the first data packet set are processed by different MAC entities.

As one embodiment, at least partial bits of any two data packets in the first data packet set are different.

As one embodiment, sizes of any two data packets in the first data packet set are different.

As one embodiment, SDUs of any two data packets in the first data packet set are different.

As one embodiment, protocol headers or sub-headers of any two data packets in the first data packet set are different.

As one embodiment, at least one domain or field in a protocol header of any two data packets in the first data packet set is different.

As one embodiment, any two data packets in the first data packet set are PDUs of a user plane.

As one embodiment, any two data packets in the first data packet set are generated by a protocol layer of the user plane.

As one embodiment, there are two data packets in the first data packet set that are associated with different QoS flows.

As one embodiment, there are two data packets in the first data packet set that have identical packet headers.

As one embodiment, there are two data packets in the first data packet set that have identical sequences.

As one embodiment, there are two data packets in the first data packet set that have identical sizes.

As one embodiment, there are two data packets in the first data packet set that are mapped to different logical channels.

As one embodiment, there are two data packets in the first data packet set that are generated by different protocol entities.

As one embodiment, any two data packets in the first data packet set are generated by an identical protocol entity.

As one embodiment, each data packet in the first data packet set uses a relay.

As one embodiment, any data packet in the first data packet set does not use a relay.

As one embodiment, a DRB used by one data packet in the first data packet set does not use a relay, and a DRB used by another data packet in the first data packet set uses a relay.

As one embodiment, each data packet in the first data packet set corresponds to the first identifier.

As one embodiment, each data packet in the first data packet set is configured with the first identifier.

As one embodiment, each data packet in the first data packet set is indicated with the first identifier.

As one embodiment, each data packet in the first data packet set is marked with the first identifier.

As one embodiment, the first identifier indicates a DRB.

As one embodiment, the first identifier indicates a PDU set.

As one embodiment, the first identifier indicates a PDCP set.

As one embodiment, the first identifier indicates a QoS flow.

As one embodiment, the first identifier indicates a group of data packets.

As one embodiment, the first identifier indicates at least one data packet.

As one embodiment, the first identifier indicates a data packet set.

As one embodiment, the first identifier indicates at least one data packet set.

As one embodiment, the first identifier is configured at the PDCP sublayer.

As one embodiment, the first identifier is configured at an upper layer of the PDCP sublayer.

As one embodiment, the first identifier is used for identifying a group of PDUs.

As one embodiment, the first identifier is used for determining a PDU set.

As one embodiment, the first identifier is associated with at least one LCG.

As one embodiment, the first identifier is associated with a plurality of LCGs.

As one embodiment, the first identifier is associated with one LCG.

As one embodiment, the first identifier comprises at least one DRB ID.

As one embodiment, the first identifier is associated with a plurality of DRB.

As one embodiment, the first identifier is associated with one DRB.

As one embodiment, the first identifier comprises one or more PDCP SNs.

As one embodiment, the first identifier comprises one or more PDCP COUNT.

As one embodiment, the first identifier comprises a QoS flow ID.

As one embodiment, the first identifier comprises a PDU session ID.

As one embodiment, the first identifier is an integer.

As one embodiment, the first identifier is a time interval.

As one embodiment, the first identifier is a display identifier.

As one embodiment, the first identifier is a PDU set ID.

As one embodiment, the first identifier is a DRB ID.

As one embodiment, a state of one data packet set comprises that the one data packet set is in progress.

As one embodiment, the phrase "the one data packet set is in progress" comprises: at least one data packet in the data packet set is not discarded.

As one embodiment, the phrase "the one data packet set is in progress" comprises: each data packet in the data packet set is not discarded.

As one embodiment, the phrase "the one data packet set is in progress" comprises: at least one data packet in the data packet set is not acknowledged.

As one embodiment, the phrase "the one data packet set is in progress" comprises: transmission of at least one data packet in the data packet set is not completed.

As one embodiment, the phrase "the one data packet set is in progress" comprises: at least one data packet in the data packet set does not arrive.

As one embodiment, the phrase "the one data packet set is in progress" comprises: at least one data packet in the data packet set is not sent.

As one embodiment, the phrase "the one data packet set is in progress" comprises: at least one data packet in the data packet set is not received.

As one embodiment, the phrase "the one data packet set is in progress" comprises: at least one data packet in the data packet set is not successfully received.

As one embodiment, the phrase "the one data packet set is in progress" comprises: at least one data packet in the data packet set is not successfully sent.

As one embodiment, the phrase "the one data packet set is in progress" comprises: at least one data packet in the data packet set is suspended.

As one embodiment, the phrase "the one data packet set is in progress" comprises: at least one data packet in the one data packet set is pending.

As one embodiment, the phrase "the one data packet set is in progress" comprises: at least one data packet in the data packet set does not arrive at a PDCP entity.

As one embodiment, the phrase "the one data packet set is in progress" comprises: at least one of PDCP SNs associated with the one data packet set is not acknowledged.

As one embodiment, the phrase "the one data packet set is in progress" comprises: at least one data packet in the one data packet set is buffered.

As one embodiment, a state of the one data packet set comprises that the one data packet set is not in progress.

As one embodiment, the phrase "the one data packet set is not in progress" comprises: each data packet in the one data packet set is acknowledged.

As one embodiment, the phrase "the one data packet set is not in progress" comprises: transmission of each data packet in the one data packet set is completed.

As one embodiment, the phrase "the one data packet set is not in progress" comprises: each data packet in the one data packet set is successfully received.

As one embodiment, the phrase "the one data packet set is not in progress" comprises: each data packet in the packet set is successfully sent.

As one embodiment, the phrase "the one data packet set is not in progress" comprises: each data packet in the packet set is not to be continuously transmitted.

As one embodiment, the phrase "the one data packet set is not in progress" comprises: the one data packet set is discarded.

As one sub-embodiment of this embodiment, the phrase "the one data packet set is discarded" comprises: at least one data packet in the one data packet set is discarded.

As one sub-embodiment of this embodiment, the phrase "the one data packet set is discarded" comprises: at least K1% of data packets in the one data packet set are discarded, and the K1 is greater than 0 and the K1 is smaller than 1.

As one sub-embodiment of this embodiment, the phrase "the one data packet set is discarded" comprises: all data packets in the one data packet set are discarded.

As one embodiment, the first event depends on a state of a plurality of data packet sets, or, the behavior of maintaining the first timer comprises: determining a state of the first timer according to the state of the plurality of data packet sets; the first data packet set is one data packet set in the plurality of data packet sets.

As one sub-embodiment of this embodiment, the plurality of data packet sets are all data packet sets of the first node.

As one sub-embodiment of this embodiment, the plurality of data packet sets comprise each data packet set of the first node.

As one sub-embodiment of this embodiment, the plurality of data packet sets comprise each data packet set sent by the first node.

As one sub-embodiment of this embodiment, the plurality of data packet sets comprise each data packet set received by the first node.

As one sub-embodiment of this embodiment, the plurality of data packet sets comprise any data packet set of the first node.

As one sub-embodiment of this embodiment, the plurality of data packet sets comprise a data packet set that is begun to be transmitted before the first event.

As one sub-embodiment of this embodiment, the plurality of data packet sets comprise a data packet set that is begun to be transmitted when the first event occurs.

As one sub-embodiment of this embodiment, the first data packet set is any data packet set in the plurality of data packet sets.

As one sub-embodiment of this embodiment, the first data packet set is an earliest data packet set on a time domain in the plurality of data packet sets.

As one sub-embodiment of this embodiment, the first data packet set is a latest data packet set on a time domain in the plurality of data packet sets.

As one embodiment, only when there is only one data packet set, the first event depends on a state of the first data packet set.

As one embodiment, when there are a plurality of data packet sets, the first event depends on a state of at least the first data packet set; and the first data packet set is one data packet set in the plurality of data packet sets.

As one embodiment, when there are a plurality of data packet sets, the first event depends on a state of each data packet set in the plurality of data packet sets; and the first data packet set is one data packet set in the plurality of data packet sets.

As one embodiment, only when there is only one data packet set, the behavior of maintaining the first timer comprises: determining a state of the first timer according to a state of a plurality of data packet sets.

As one embodiment, when there are a plurality of data packet sets, the behavior of maintaining the first timer comprises: determining a state of the first timer according to a state of at least the first data packet set; and the first data packet set is one data packet set in the plurality of data packet sets.

As one embodiment, when there are a plurality of data packet sets, the behavior of maintaining the first timer comprises: determining a state of the first timer according to a state of a plurality of data packet sets; the first data packet set is one data packet set in the plurality of data packet sets.

As one embodiment, the meaning of the start is to begin.

As one embodiment, the meaning of the start is to get begun.

As one embodiment, the meaning of the start is to start.

As one embodiment, the meaning of the restart is to begin again.

As one embodiment, the meaning of the restart is to get begun again.

As one embodiment, the meaning of the restart is to restart.

As one embodiment, the meaning of the behavior of discarding comprises: discarding at the PDCP sublayer.

As one embodiment, the meaning of the behavior of discarding comprises: discarding at the RLC sublayer.

As one embodiment, the meaning of the behavior of discarding comprises: discard.

As one embodiment, the meaning of the behavior discarding comprises: delete.

As one embodiment, the meaning of the behavior of discarding comprises: delete in a buffer.

As one embodiment, the meaning of the behavior of discarding comprises: not continuously retain.

As one embodiment, the meaning of the behavior of discarding comprises: not continuously send.

### Embodiment 2

Embodiment 2 illustrates a schematic diagram of a network architecture according to one embodiment of the present application, as shown in FIG. 2. Figure 2 illustrates a network architecture 200 of a 5G NR (New Radio)/LTE (Long-Term Evolution)/LTE-A (Long-Term Evolution Advanced) system. The 5G NR/LTE/LTE-A network architecture 200 may be referred to as 5GS (5G System)/EPS (Evolved Packet System) 200 or some other suitable terms. The 5GS/EPS 200 comprises at least one of UE (User Equipment) 201, RAN (radio access network) 202, 5GC (5G Core Network)/EPC (Evolved Packet Core) 210, HSS (Home Subscriber Server)/UDM (Unified Data Management) 220, and Internet services 230. 5GS/EPS can be interconnected with other access networks, but these entities/interfaces are not shown for simplicity. As shown in the figure, the 5GS/EPS provides a packet switching service, however those skilled in the art will readily understand that various concepts presented throughout the present application can be extended to networks or other cellular networks that provide circuit switching services. RAN comprises a node 203 and other nodes 204. The node 203 provides user and control plane protocol termination toward UE201. The node 203 may be connected to other nodes 204 via an Xn interface (e.g., backhaul)/X2 interface. The node 203 may also be referred to as a base station, a base transceiver station, a radio base station, a radio transceiver, a transceiver function, a basic service set (BSS), an extended service set (ESS), a TRP (transmitter receive point), or some other suitable terms. The node 203 provides the UE201 with an access point to 5GC/EPC210. Examples of UE201 include cellular telephones, smart phones, Session Initiation Protocol (SIP) telephones, laptops, personal digital assistants (PDAs), satellite radios, non-terrestrial base station communications, satellite mobile communications, global positioning systems, multimedia apparatuses, video apparatuses, digital audio players (for example, MP3 players), cameras, game consoles, drones, aircraft, narrowband Internet of Things devices, machine type communication devices, land transportation vehicles, automobiles, wearable devices, or any other similar functional apparatuses. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terms. The node 203 is connected to 5GC/EPC210 through an S1/NG interface. The 5GC/EPC210 comprises MME (Mobility Management Entity)/AMF (Authentication Management Field)/SMF (Session Management Function) 211, other MME/AMF/SMF214, S-GW (Service Gateway)/UPF (User Plane Function) 212, and P-GW (Packet Data Network Gateway)/UPF213. The MME/AMF/SMF211 is a control node that processes signaling between the UE201 and the 5GC/EPC210. Generally, the MME/AMF/SMF211 provides bearer and connection management. All user IP (Internet Protocol) packets are transmitted through the S-GW/UPF212, and the S-GW/UPF212 itself is connected to the P-GW/UPF213. The P-GW provides UE IP address assignment and other functions. The P-GW/UPF213 is connected to the Internet services 230. The Internet services 230 comprise an operator's corresponding Internet protocol service, which may specifically include the Internet, intranets, IMS (IP Multimedia Subsystem), and packet switching streaming services.

As one embodiment, the UE201 corresponds to the first node in the present application.

As one embodiment, the UE201 is a piece of user equipment (UE).

As one embodiment, the UE201 is a base station device (BS).

As one embodiment, the UE201 is a relay device.

As one embodiment, the node 203 corresponds to the second node in the present application.

As one embodiment, the node 203 is a base station device.

As one embodiment, the node 203 is user equipment.

As one embodiment, the node 203 is a relay device.

As one embodiment, the node 203 is a gateway.

As one embodiment, the user equipment supports the transmission of a Non-Terrestrial Network (NTN).

As one embodiment, the user equipment supports the transmission of a terrestrial network.

As one embodiment, the user equipment supports the transmission in a large-latency-difference network.

As one embodiment, the user equipment supports Dual Connection (DC) transmission.

As one embodiment, the user equipment comprises a handheld terminal.

As one embodiment, the user equipment comprises a wearable device.

As one embodiment, the user equipment comprises an aircraft.

As one embodiment, the user equipment comprises a vehicle-mounted terminal.

As one embodiment, the user equipment comprises a vessel.

As one embodiment, the user device comprises an Internet of Things terminal.

As one embodiment, the user equipment comprises a terminal of the industrial Internet of Things.

As one embodiment, the user equipment comprises a device that supports the transmission with low latency and high reliability.

As one embodiment, the user equipment comprises a test device.

As one embodiment, the user equipment comprises a signaling tester.

As one embodiment, the base station device comprises a base transceiver station (BTS).

As one embodiment, the base station device comprises a Node B (Node B, NB).

As one embodiment, the base station device comprises a gNB.

As one embodiment, the base station device comprises an eNB.

As one embodiment, the base station device comprises an ng-eNB.

As one embodiment, the base station device comprises an en-gNB.

As one embodiment, the base station device supports the transmission in a non-terrestrial network.

As one embodiment, the base station device supports the transmission in a large-latency-difference network.

As one embodiment, the base station device supports the transmission of a terrestrial network.

As one embodiment, the base station device comprises a Marco Cellular base station.

As one embodiment, the base station device comprises a Micro Cell base station.

As one embodiment, the base station device comprises a Pico Cell base station.

As one embodiment, the base station device comprises a home base station (Femtocell).

As one embodiment, the base station device comprises a base station device that supports large time latency differences.

As one embodiment, the base station device comprises a flight platform device.

As one embodiment, the base station device comprises a satellite device.

As one embodiment, the base station device comprises a TRP (Transmitter Receiver Point).

As one embodiment, the base station device comprises a CU (Centralized Unit).

As one embodiment, the base station device comprises a DU (Distributed Unit).

As one embodiment, the base station device comprises a test device.

As one embodiment, the base station device comprises a signaling tester.

As one embodiment, the base station device comprises an IAB (Integrated Access and Backhaul)-node.

As one embodiment, the base station device comprises an IAB-donor.

As one embodiment, the base station device comprises an IAB-donor-CU.

As one embodiment, the base station device comprises an IAB-donor-DU.

As one embodiment, the base station device comprises an IAB-DU.

As one embodiment, the base station device comprises an IAB-MT.

As one embodiment, the relay device comprises a relay.

As one embodiment, the relay device comprises an L3 relay.

As one embodiment, the base station device comprises an L2 relay.

As one embodiment, the relay device comprises a router.

As one embodiment, the relay device comprises a switch.

As one embodiment, the relay device comprises user equipment.

As one embodiment, the relay device comprises a base station device.

### Embodiment 3

Embodiment 3 shows a schematic diagram of an embodiment of a wireless protocol architecture of a user plane and a control plane according to the present application, as shown in FIG. 3. FIG. 3 is a schematic diagram illustrating an embodiment of a radio protocol architecture for a user plane 350 and a control plane 300, and FIG. 3 shows a radio protocol architecture for the control plane 300 using three layers: layer 1, layer 2, and layer 3. Layer 1 (L1 layer) is the lowest layer and implements various PHY (physical layer) signal processing functions. The L1 layer will be referred to herein as PHY301. Layer 2 (L2 layer) 305 is above PHY301, and comprises a MAC (Medium Access Control) sublayer 302, an RLC (Radio Link Control) sublayer 303, and a PDCP (Packet Data Convergence Protocol) sublayer 304. The PDCP sublayer 304 provides multiplexing between different radio bearers and logical channels. The PDCP sublayer 304 also provides security by encrypting data packets, and provides cross-zone mobility support. The RLC sublayer 303 provides segmentation and reassembly of upper layer packets, retransmission of lost data packets, and reordering of data packets to compensate for disordered reception due to HARQ (Hybrid Automatic Repeat Request). The MAC sublayer 302 provides multiplexing between logical channels and transport channels. The MAC sublayer 302 is also responsible for allocating various radio resources (e.g., resource blocks) in a cell. The MAC sublayer 302 is also responsible for HARQ operations. An RRC (Radio Resource Control) sublayer 306 in layer 3 (L3 layer) in the control plane 300 is responsible for obtaining radio resources (i.e., radio bearers) and configuring a lower layer using RRC signaling. The radio protocol architecture of the user plane 350 comprises layer 1 (L1 layer) and layer 2 (L2 layer). In the user plane 350, the radio protocol architecture is generally the same as corresponding layers and sublayers in the control plane 300 for a physical layer 351, the PDCP sublayer 354 in the L2 layer 355, the RLC sublayer 353 in the L2 layer 355, and the MAC sublayer 352 in the L2 layer 355, but the PDCP sublayer 354 also provides header compression for upper layer data packets to reduce radio transmission overhead. The L2 layer 355 in the user plane 350 also comprises an SDAP (Service Data Adaptation Protocol) sub-layer 356, and the SDAP sub-layer 356 is responsible for mapping between QoS streams and data radio bearers (DRBs) to support service diversity.

As one embodiment, the wireless protocol architecture in FIG. 3 is applicable to the first node in the present application.

As one embodiment, the wireless protocol architecture in FIG. 3 is applicable to the second node in the present application.

As one embodiment, the first expiration value in the present application is generated at the RRC306.

As one embodiment, the first expiration value in the present application is generated at the MAC302 or MAC352.

As one embodiment, the first expiration value in the present application is generated at the PHY301 or PHY351.

As one embodiment, the second expiration value in the present application is generated at the RRC306.

As one embodiment, the second expiration value in the present application is generated at the MAC302 or MAC352.

As one embodiment, the second expiration value in the present application is generated at the PHY301 or PHY351.

As one embodiment, the first MAC CE in the present application is generated at the MAC302 or MAC352.

As one embodiment, the second time length in the present application is generated at the RRC306.

As one embodiment, the second time length in the present application is generated at the MAC302 or MAC352.

As one embodiment, the second time length in the present application is generated at the PHY301 or PHY351.

As one embodiment, the first data packet set in the present application is generated at the RRC306.

As one embodiment, the first expiration value in the present application is generated at the SDAP356.

As one embodiment, the first data packet set in the present application is generated at the PDCP304 or PDCP354.

As one embodiment, the first data packet set in the present application is generated at the RLC303 or RLC353.

As one embodiment, the first data packet set in the present application is generated at a higher layer.

As one embodiment, the first data packet set in the present application is generated at an application layer.

As one embodiment, the first data packet set in the present application is generated at an IP layer.

As one embodiment, each data packet set in the plurality of data packet sets in the present application is generated at the RRC306.

As one embodiment, each data packet set in the plurality of data packet sets in the present application is generated at the SDAP356

As one embodiment, each data packet set in the plurality of data packet sets in the present application is generated at the PDCP304 or PDCP354.

As one embodiment, each data packet set in the plurality of data packet sets in the present application is generated at the RLC303 or RLC353.

As one embodiment, each data packet set in the plurality of data packet sets in the present application is generated at a higher layer.

As one embodiment, each data packet set in the plurality of data packet sets in the present application is generated at the present application layer.

As one embodiment, each data packet set in the plurality of data packet sets in the present application is generated at the IP layer.

### Embodiment 4

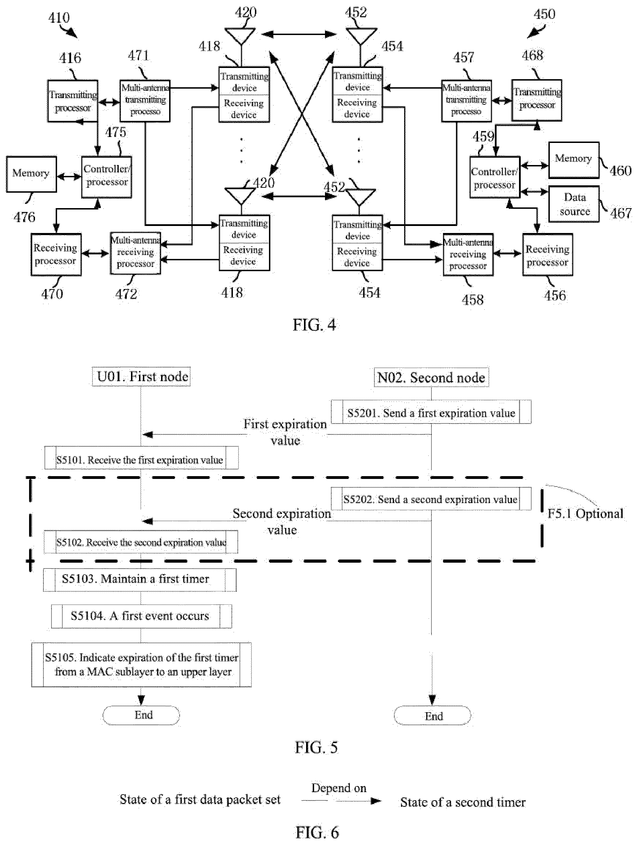

Embodiment 4 shows a schematic diagram of a first communication device and a second communication device according to the present application, as shown in FIG. 4. FIG. 4 is a block diagram of the first communication device 450 and the second communication device 410 that communicate with each other in the access network.

The first communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

The second communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

In transmission from the second communication device 410 to the first communication device 450, at the second communication device 410, upper layer data packets from the core network are provided to the controller/processor 475. The controller/processor 475 implements the functionality of the L2 layer. In transmission from the second communication device 410 to the first communication device 450, the controller/processor 475 provides header compression, encryption, packet segmentation and reordering, multiplexing between logical channels and transport channels, and radio resource assignment of the first communication device 450 based on various priority metrics. The controller/processor 475 is also responsible for retransmission of lost packets and signaling to the first communication device 450. The transmitting processor 416 and the multi-antenna transmitting processor 471 implement various signal processing functions for the L1 layer (that is, the physical layer). The transmitting processor 416 implements encoding and interleaving to facilitate forward error correction (FEC) at the second communication device 410, and mapping of signal clusters based on various modulation schemes (e.g., binary phase shift keying (BPSK), quadrature phase shift keying (QPSK), M phase shift keying (M-PSK), M quadrature amplitude modulation (M-QAM)). The multi-antenna transmitting processor 471 performs digital spatial precoding of the encoded and modulated symbols, including codebook-based precoding and non-codebook-based precoding, and beamforming processing, to generate one or more spatial streams. The transmitting processor 416 then maps each spatial stream to a subcarrier, multiplexes with a reference signal (e.g., pilot) in a time domain and/or a frequency domain, and then uses a Fast Fourier Inverse Transform (IFFT) to generate a physical channel carrying a time domain multi-carrier symbol stream. The multi-antenna transmitting processor 471 then performs transmit analog precoding/beamforming operations on the time domain multi-carrier symbol stream. Each transmitting device 418 converts the baseband multi-carrier symbol stream provided by the multi-antenna transmitting processor 471 into a radio frequency stream, and then provides it to different antennas 420.

In transmission from the second communication device 410 to the first communication device 450, at the first communication device 450, each receiving device 454 receives a signal through its corresponding antenna 452. Each receiving device 454 recovers information modulated to the radio frequency carrier and converts the radio frequency stream into a baseband multi-carrier symbol stream to provide it to the receiving processor 456. The receiving processor 456 and the multi-antenna receiving processor 458 implement various signal processing functions of the L1 layer. The multi-antenna receiving processor 458 performs receiving analog precoding/beamforming operations on the baseband multi-carrier symbol stream from the receiving device 454. The receiving processor 456 uses Fast Fourier Transform (FFT) to convert a baseband multi-carrier symbol stream after receiving analog precoding/beamforming operations from a time domain to a frequency domain. In the frequency domain, the physical layer data signals and the reference signals are demultiplexed by the receiving processor 456, where the reference signals are used for channel estimation, and the data signals undergo multi-antenna detection in the multi-antenna receiving processor 458 to recover any spatial stream destined for the first communication device 450. Symbols on each spatial stream are demodulated and recovered in the receiving processor 456 and generate soft decisions. The receiving processor 456 then decodes and deinterleaves the soft decisions to recover upper layer data and control signals transmitted by the second communication device 410 on the physical channel. The upper layer data and control signals are then provided to the controller/processor 459. The controller/processor 459 implements the functions of the L2 layer. The controller/processor 459 may be associated with a memory 460 storing program codes and data. The memory 460 may be referred to as a computer-readable medium. In transmission from the second communication device 410 to the second communication device 450, the controller/processor 459 provides demultiplexing between transport channels and logical channels, packet reassembly, decryption, header decompression, and control signal processing to recover upper layer data packets from the core network. The upper layer data packets are then provided to all protocol layers above the L2 layer. Various control signals may also be provided to L3 for L3 processing.

In transmission from the first communication device 450 to the second communication device 410, at the first communication device 450, the data source 467 is used for providing upper layer data packets to the controller/processor 459. The data source 467 represents all protocol layers above the L2 layer. Similar to the transmission function at the second communication device 410 as described for the transmission from the second communication device 410 to the first communication device 450, the controller/processor 459 implements header compression, encryption, packet segmentation and reordering, and multiplexing between logical channels and transport channels based on wireless resource assignment, thereby implementing L2 layer functions for the user plane and the control plane. The controller/processor 459 is also responsible for retransmission of lost packets and signaling to the second communication device 410. The transmitting processor 468 performs modulation mapping and channel encoding processing, and the multi-antenna transmitting processor 457 performs digital multi-antenna spatial precoding, including codebook-based precoding and non-codebook-based precoding, and beamforming processing. The transmitting processor 468 modulates the resulting spatial streams into multi-carrier/single-carrier symbol streams. These streams undergo analog precoding/beamforming operations in the multi-antenna transmitting processor 457 before being provided to different antennas 452 via the transmitting device 454. Each transmitting device 454 first converts baseband symbol streams provided from the multi-antenna transmitting processor 457 into radio frequency symbol streams, and then supplies the radio frequency symbol streams to the antenna 452.

In transmission from the first communication device 450 to the second communication device 410, the function at the second communication device 410 is similar to the reception function at the first communication device 450 as described for the transmission from the second communication device 410 to the first communication device 450. Each receiving device 418 receives the radio frequency signals through its corresponding antenna 420, converts the received radio frequency signals into baseband signals, and provides the baseband signals to the multi-antenna receiving processor 472 and the receiving processor 470. The receiving processor 470 and the multi-antenna receiving processor 472 jointly implement the function of L1. The controller/processor 475 implements the functions of the L2 layer. The controller/processor 475 may be associated with a memory 476 storing program codes and data. The memory 476 may be referred to as a computer-readable medium. In transmission from the first communication device 450 to the second communication device 410, the controller/processor 475 provides demultiplexing between transport channels and logical channels, packet reassembly, decryption, header decompression, and control signal processing to recover upper layer data packets from the UE450. The upper layer data packets from the controller/processor 475 may be provided to the core network.

As one embodiment, the first communication device 450 comprises: at least one processor and at least one memory, and the at least one memory comprises computer program codes; The at least one memory and the computer program code are configured to be used together with the at least one processor, and the first communication device 450 at least: receives a first expiration value; maintains a first timer; and in response to the occurrence of a first event, indicates the expiration of the first timer from a MAC sublayer to an upper layer; wherein the first expiration value is used for determining the expiration time of the first timer; the behavior of maintaining the first timer comprises: starting or restarting the first timer in response to the occurrence of any event in a second event set; the second event set comprising two events, namely any MAC entity receiving a MAC SDU of a DTCH logical channel and any MAC entity sending a MAC SDU of a DTCH logical channel; the first event comprises the expiration of the first timer; the first event depends on a state of a first data packet set, or, the behavior of maintaining the first timer comprises: determining a state of the first timer according to the state of the first data packet set.

As one embodiment, the first communication device 450 comprises: a memory storing a computer-readable instruction program, the computer-readable instruction program generates an action when executed by at least one processor, and the action comprises: receiving a first expiration value; maintaining a first timer; and in response to the occurrence of a first event, indicating the expiration of the first timer from a MAC sublayer to an upper layer; wherein the first expiration value is used for determining the expiration time of the first timer; the behavior of maintaining the first timer comprises: starting or restarting the first timer in response to the occurrence of any event in a second event set; the second event set comprising two events, namely any MAC entity receiving a MAC SDU of a DTCH logical channel and any MAC entity sending a MAC SDU of a DTCH logical channel; the first event comprises the expiration of the first timer; the first event depends on a state of a first data packet set, or, the behavior of maintaining the first timer comprises: determining a state of the first timer according to the state of the first data packet set.

As one embodiment, the second communication device 410 comprises: at least one processor and at least one memory, and the at least one memory comprises computer program codes; The at least one memory and the computer program codes are configured to be used together with the at least one processor. The second communication device 410 at least: sends a first expiration value; wherein a recipient of the first expiration value maintains a first timer; in response to the occurrence of a first event, the recipient of the first expiration value indicates the expiration of the first timer from a MAC sublayer to an upper layer; the first expiration value is used for determining expiration time of the first timer; wherein the behavior of the recipient of the first expiration value maintaining the first timer comprises: the recipient of the first expiration value starting or restarting the first timer in response to the occurrence of any event in a second event set; the second event set comprising two events, namely any MAC entity receiving a MAC SDU of a DTCH logical channel and any MAC entity sending a MAC SDU of a DTCH logical channel; the first event comprises the expiration of the first timer; the first event depending on a state of a first data packet set, or, the behavior that the recipient of the first expiration value maintaining the first timer comprising: the recipient of the first expiration value determines a state of the first timer according to the state of the first data packet set.

As one embodiment, the second communication device 410 comprises: a memory storing a computer-readable instruction program, the computer-readable instruction program generates an action when executed by at least one processor, and the action comprises: sending a first expiration value; wherein a recipient of the first expiration value maintains a first timer; in response to the occurrence of a first event, the recipient of the first expiration value indicates the expiration of the first timer from a MAC sublayer to an upper layer; the first expiration value is used for determining expiration time of the first timer; wherein the behavior of the recipient of the first expiration value maintaining the first timer comprises: the recipient of the first expiration value starting or restarting the first timer in response to the occurrence of any event in a second event set; the second event set comprising two events, namely any MAC entity receiving a MAC SDU of a DTCH logical channel and any MAC entity sending a MAC SDU of a DTCH logical channel; the first event comprises the expiration of the first timer; the first event depending on a state of a first data packet set, or, the behavior that the recipient of the first expiration value maintaining the first timer comprising: the recipient of the first expiration value determines a state of the first timer according to the state of the first data packet set.

As one embodiment, at least one of the antenna 452, the receiving device 454, the receiving processor 456, and the controller/processor 459 is used for receiving a first expiration value.

As one embodiment, at least one of the antenna 420, the transmitting device 418, the transmitting processor 416, and the controller/processor 475 is used for sending the first expiration value.

As one embodiment, at least one of the antenna 452, the receiving device 454, the receiving processor 456, and the controller/processor 459 is used for receiving a second expiration value.

As one embodiment, at least one of the antenna 420, the transmitting device 418, the transmitting processor 416, and the controller/processor 475 is used for sending the second expiration value.

As one embodiment, at least one of the antenna 452, the receiving device 454, the receiving processor 456, and the controller/processor 459 is used for receiving a second time length.

As one embodiment, at least one of the antenna 420, the transmitting device 418, the transmitting processor 416, and the controller/processor 475 is used for sending the second time length.

As one embodiment, at least one of the antenna 452, the transmitting device 454, the transmitting processor 468, and the controller/processor 459 is used for sending a first MAC CE.

As one embodiment, at least one of the antenna 420, the receiving device 418, the receiving processor 470, and the controller/processor 475 is used for receiving the first MAC CE.

As one embodiment, the first communication device 450 corresponds to the first node in the present application.

As one embodiment, the second communication device 410 corresponds to the second node in the present application.

As one embodiment, the first communication device 450 is a piece of user equipment.

As one embodiment, the first communication device 450 is a base station device (gNB/eNB/ng-eNB).

As one embodiment, the first communication device 450 is a relay device.

As one embodiment, the second communication device 410 is a piece of user equipment.

As one embodiment, the second communication device 410 is a base station device (gNB/eNB/ng-eNB).

As one embodiment, the second communication device 410 is a relay device.

### Embodiment 5

Embodiment 5 illustrates a flowchart of wireless signal transmission according to one embodiment of the present application, as shown in FIG. 5. It is particularly noted that the order in this example does not limit the order of signal transmission and the order of implementation in the present application.

For **a first node U01,** in step S5101, a first expiration value is received; in step S5102, a second expiration value is received; in step S5103, a first timer is maintained; in step S5104, a first event occurs; in step S5105, in response to the occurrence of the first event, the expiration of the first timer is indicated from a MAC sublayer to an upper layer.

For a **second node N02,** in step S5201, the first expiration value is sent; in step S5202, the second expiration value is sent.

In Embodiment 5, the first expiration value is used for determining expiration time of the first timer; the second expiration value is used for determining the expiration time of the first timer; the behavior of determining a state of the first timer according to a state of the first data packet set comprises: determining whether the first timer is set to the first expiration value or the second expiration value according to the state of the first data packet set; the behavior of maintaining the first timer comprises: starting or restarting the first timer in response to the occurrence of any event in a second event set; the second event set comprising two events, namely any MAC entity receiving a MAC SDU of a DTCH logical channel and any MAC entity sending a MAC SDU of a DTCH logical channel; the first event comprises the expiration of the first timer; the first event depends on a state of a first data packet set, or, the behavior of maintaining the first timer comprises: determining a state of the first timer according to the state of the first data packet set.

As one embodiment, the first node U01 is a piece of user equipment.

As one embodiment, the first node U01 is a base station device.

As one embodiment, the first node U01 is a relay device.

As one embodiment, the second node N02 is a base station device.

As one embodiment, the second node N02 is a piece of user equipment.

As one embodiment, the second node N02 is a relay device.

As one embodiment, the first node U01 is a piece of user equipment, and the second node N02 is a base station device.

As one embodiment, the first node U01 is a piece of user equipment, and the second node N02 is a relay device.

As one embodiment, the first node U01 is a piece of user equipment, and the second node N02 is a piece of user equipment.

As one embodiment, the first node U01 is a base station device, and the second node N02 is a base station device.

As one embodiment, the first node U01 is a relay device, and the second node N02 is a base station device.

As one embodiment, the first node U01 and the second node N02 are connected through a uu interface.

As one embodiment, the first node U01 and the second node N02 are connected through an Xn interface.

As one embodiment, the first node U01 and the second node N02 are connected through an X2 interface.

As one embodiment, the first node U01 and the second node N02 are connected through a PC5 port.

As one embodiment, the first node U01 and the second node N02 are connected through an air interface.

As one embodiment, a dotted block F5.1 is optional.

As one embodiment, the dotted block F5.1 exists.

As one sub-embodiment of this embodiment, the second expiration value is configured.

As one embodiment, the dotted block F5.1 does not exist.

As one sub-embodiment of this embodiment, the second expiration value is not configured.

As one sub-embodiment of this embodiment, the second expiration value is not to be configured.

As one embodiment, the second expiration value and the first expiration value are not equal.

As one embodiment, the second expiration value and the first expiration value are equal.

As one embodiment, the second expiration value and the first expiration value are respectively configured by two RRC fields.

As one embodiment, the second expiration value is configurable.

As one embodiment, the second expiration value is preconfigured.

As one embodiment, the second expiration value is XR-specific.

As one embodiment, the second expiration value comprises a limited number of time units.

As one embodiment, the second expiration value comprises at least 1 time unit.

As one embodiment, the second expiration value comprises at least 0.5 time unit.

As one embodiment, the quantity of time units included by the second expiration value is configurable.

As one embodiment, the quantity of time units included by the second expiration value is preconfigured.

As one embodiment, one RRC field indicates the second expiration value.

As one sub-embodiment of this embodiment, the one RRC field is a DataInactivityTimer field.

As one sub-embodiment of this embodiment, a name of the one RRC field comprises DataInactivityTimer.

As one sub-embodiment of this embodiment, the one RRC field belongs to MAC-CellGroupConfig IE.

As one sub-embodiment of this embodiment, the one RRC field belongs to MAC-CellGroupConfig IE, and the MAC-CellGroupConfig IE is configured to MCG.

As one sub-embodiment of this embodiment, the one RRC field belongs to CellGroupConfig IE, and the CellGroupConfig IE is configured to an MCG.

As one sub-embodiment of this embodiment, the one RRC field belongs to an RRCReconfiguration message.

As one sub-embodiment of this embodiment, the RRC field belongs to an RRCResume message.

As one sub-embodiment of this embodiment, the one RRC field belongs to an RRCSetup message.

As one embodiment, if the first data packet set is not in progress, the first timer is set to the first expiration value.

As one embodiment, if any data packet set in the plurality of data packet sets is not in progress, the first timer is set to the first expiration value.

As one embodiment, if any data packet set is not in progress, the first timer is set to the first expiration value.

As one embodiment, if the first data packet set is in progress, the first timer is set to the second expiration value.

As one embodiment, if at least one data packet set in the plurality of data packet sets is in progress, the first timer is set to the second expiration value.

As one embodiment, if at least one data packet set is in progress, the first timer is set to the second expiration value.

As one embodiment, only when the first timer is set to the second expiration value, the second expiration value is used for determining expiration time of the first timer.

As one embodiment, if the first timer is set to the first expiration value, "the running time of the first timer reaches the first expiration value" is used for determining the expiration of the first timer.

As one embodiment, if the first timer is set to the first expiration value, the expiration time of the first timer is the time when the running time of the first timer reaches the first expiration value.

As one embodiment, if the first timer is set to the first expiration value, a time interval between the expiration time of the first timer and the time when the first timer is started or restarted is not smaller than the first expiration value.

As one embodiment, if the first timer is set to the second expiration value, "the running time of the first timer reaches the second expiration value" is used for determining the expiration of the first timer.

As one embodiment, if the first timer is set to the second expiration value, the expiration time of the first timer is the time when the running time of the first timer reaches the second expiration value.

As one embodiment, if the first timer is set to the second expiration value, a time interval between the expiration time of the first timer and the time when the first timer is started or restarted is not smaller than the second expiration value.

### Embodiment 6

Embodiment 6 illustrates a schematic diagram that a state of a first data packet set depends on a state of a second timer according to one embodiment of the present application.

In Embodiment 6, a state of the first data packet set depends on a state of a second timer; the phrase "the state of the first data packet set depends on a state of the second timer" comprises: the second timer being running is used for determining that the first data packet set is in progress; and the second timer being not running is used for determining that the first data packet set is not in progress.

As one embodiment, the behavior of maintaining the first timer comprises: determining a state of the first timer according to a state of the second timer.

As one sub-embodiment of this embodiment, the state of the first timer is related to the state of the second timer.

As one sub-embodiment of this embodiment, a trigger condition in which the first timer is started or restarted is related to the state of the second timer.

As one sub-embodiment of this embodiment, whether the first timer is running is related to the state of the second timer.

As one sub-embodiment of this embodiment, a trigger condition in which the first timer is stopped is related to the state of the second timer.

As one sub-embodiment of this embodiment, a trigger condition in which the first timer is considered to expire is related to the state of the second timer.

As one embodiment, the state of the second timer is used for determining the state of the first data packet set.

As one embodiment, at least the state of the second timer is used for determining the state of the first data packet set.

As one embodiment, whether the second timer is running is used for determining whether the first data packet set is in progress.

As one embodiment, whether at least the second timer is running is used for determining whether the first data packet set is in progress.

As one embodiment, the state of the first data packet set is related to the state of at least the second timer.

As one embodiment, if the second timer is running, the first data packet set is in progress.

As one embodiment, if the second timer is running, the first data packet set is not discarded.

As one embodiment, if the second timer is not running, the first data packet set is not in progress.

As one embodiment, if the second timer is not running, the first data packet set is successfully completed.

As one embodiment, if the second timer is not running, the first data packet set is discarded.

As one embodiment, the second timer is an XR-specific timer.

As one embodiment, the second timer is a higher layer timer.

As one embodiment, the second timer is a PDCP sublayer timer.

As one embodiment, the second timer is an RLC sublayer timer.

As one embodiment, the second timer is an MAC sublayer timer.

As one embodiment, the second timer is discardTimer.

As one embodiment, the second timer is t-Reordering.

As one embodiment, the second timer performs positive timing.

As one embodiment, an initial value of the second timer is 0.

As one embodiment, the second timer progressively increases from 0 after being started.

As one embodiment, the second timer counts down.

As one embodiment, an initial value of the second timer is a second time length.

As one embodiment, the second timer progressively decreases from a second time length after being started.

As one embodiment, the second timer being equal to a second time length is used for determining the expiration of the second timer; the second timer performs positive timing.

As one embodiment, when the second timer is equal to a second time length, the second timer expires; the second timer performs positive timing.

As one embodiment, the second time length is determined by the first node.

As one embodiment, the second time length is configurable.

As one embodiment, the second time length is preconfigured.

As one embodiment, an RRC field is used for configuring the second time length.

As one embodiment, the second time length is the first time length.

As one embodiment, the second timer being equal to 0 is used for determining the expiration of the second timer; the second timer counts down.

As one embodiment, when the second timer is equal to 0, the second timer expires; the second timer counts down.

As one embodiment, in response to the expiration of the second timer, a first inter-layer indication is sent from a MAC sublayer to an upper layer; the second timer is a MAC sublayer timer.

As one sub-embodiment of this embodiment, the expiration of the second timer triggers the sending of the first inter-layer indication from a MAC sublayer to an upper layer.

As one sub-embodiment of this embodiment, at least one PDCP entity receives the first inter-layer indication.

As one sub-embodiment of this embodiment, only one PDCP entity receives the first inter-layer indication.

As one sub-embodiment of this embodiment, each PDCP entity associated with the first data packet set receives the first inter-layer indication.

As one sub-embodiment of this embodiment, at least one PDCP entity associated with the first data packet set receives the first inter-layer indication.

As one sub-embodiment of this embodiment, only one PDCP entity associated with the first data packet set receives the first inter-layer indication.

As one sub-embodiment of this embodiment, the first inter-layer indication is an indication of the expiration of the second timer from the MAC sublayer.

As one sub-embodiment of this embodiment, the first inter-layer indication indicates the expiration of the second timer.

As one sub-embodiment of this embodiment, the first inter-layer indication indicates the discarding of the first data packet set.

As one sub-embodiment of this embodiment, the first inter-layer indication is an indication that is from the MAC sublayer and indicates the discarding of the first data packet set.

As one embodiment, the second timer is not running, comprising: the second timer is not timing.

As one embodiment, the second timer is not running, comprising: the second timer does not change over time.

As one embodiment, the second timer is not running, comprising: the second timer is stopped.

As one embodiment, the second timer is not running, comprising: the second timer is not configured.

As one embodiment, the second timer is not running, comprising: the second timer expires.

As one embodiment, the second timer is not running, comprising: the second timer is not started.

As one embodiment, the second timer is not running, comprising: the second timer is not restarted.

As one embodiment, the second timer is not running, comprising: the second timer is not started and is not restarted.

As one embodiment, the second timer is running, comprising: the second timer is started and the second timer does not expire.

As one embodiment, the second timer is running, comprising: the second timer is restarted and the second timer does not expire.

As one embodiment, the second timer is started or restarted whenever a MAC SDU associated with the first data packet set is sent.

As one embodiment, the second timer is started or restarted whenever a MAC SDU associated with the first data packet set is received.

As one embodiment, the second timer is started or restarted whenever an indication that one data packet in the first data packet set from an upper layer is sent is received.

As one embodiment, the second timer is started or restarted whenever an indication that one data packet in the first data packet set from an upper layer is received is received.

### Embodiment 7

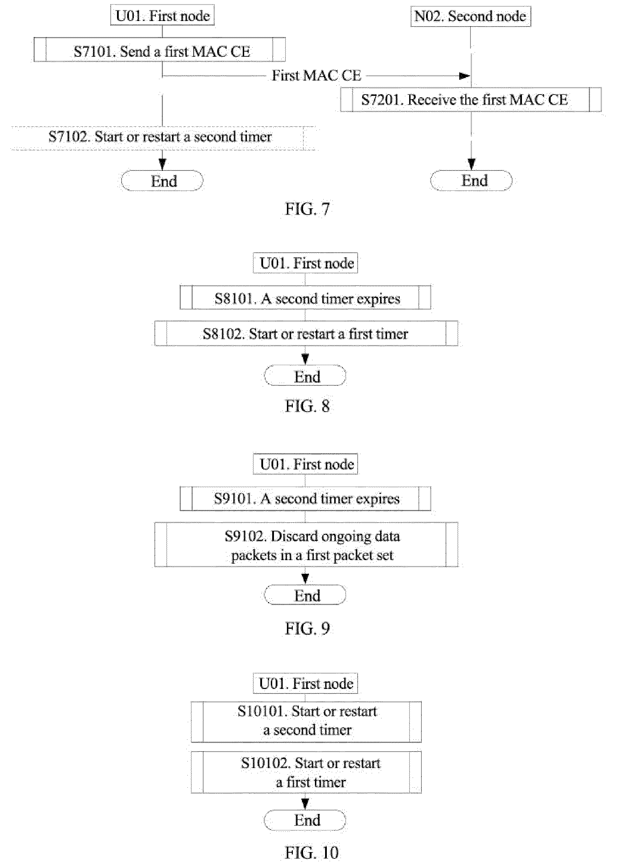

Embodiment 7 illustrates a flowchart of wireless signal transmission according to another embodiment of the present application, as shown in FIG. 7. It is particularly noted that the order in this example does not limit the order of signal transmission and the order of implementation in the present application.

For **a first node U01,** in step S7101, a first MAC CE is sent; in step S7102, along with the first MAC CE, the second timer is started or restarted.

For **a second node N02,** in step S7201, the first MAC CE is received.

In Embodiment 7, the first MAC CE indicates a first data amount and a first time length.

As one embodiment, the step S7102 is optional.

As one embodiment, the step S7102 exists.

As one sub-embodiment of this embodiment, the step S7101 is before the step S7102.

As one sub-embodiment of this embodiment, the step S7101 is after the step S7102.

As one sub-embodiment of this embodiment, the phrase "along with the first MAC CE" comprises: just before the first MAC CE is sent or just after the first MAC CE is sent.

As one sub-embodiment of this embodiment, the phrase "along with the first MAC CE" comprises: when the first MAC CE is sent.

As one sub-embodiment of this embodiment, the phrase "along with the first MAC CE" comprises: when multiplexing and assembly procedures are indicated to generate the first MAC CE.

As one sub-embodiment of this embodiment, the phrase "along with the first MAC CE" comprises: when a MAC PDU comprising the first MAC CE is sent.

As one sub-embodiment of this embodiment, along with the first MAC CE, the second time length is set to the first time length.

As one sub-embodiment of this embodiment, the behavior of starting or restarting the second timer comprises: starting the second timer.

As one sub-embodiment of this embodiment, the behavior of starting or restarting the second timer comprises: restarting the second timer.

As one sub-embodiment of this embodiment, the behavior of starting or restarting the second timer comprises: starting the second timer if the second timer is not running; and restarting the second timer if the second timer is running,.

As one sub-embodiment of this embodiment, the behavior of restarting the second timer comprises: enabling the second timer to begin timing again.

As one sub-embodiment of this embodiment, the behavior of restarting the second timer comprises: setting the second timer to an initial value of the second timer.

As one embodiment, the step S7102 does not exist.

As one sub-embodiment of this embodiment, the second timer is used for setting the first time length.

As one sub-embodiment of this embodiment, the first time length is a value of the second timer.

As one sub-embodiment of this embodiment, the first time length is the remaining time of the second timer.

As one sub-embodiment of this embodiment, the second timer is started or restarted in response to receiving an indication of the first time length at a MAC sublayer.

As one embodiment, the first MAC CE is a MAC CE.

As one embodiment, the first MAC CE is a BSR MAC CE.

As one embodiment, the first MAC CE is an enhanced BSR MAC CE.

As one embodiment, the first MAC CE is an XR-specific BSR MAC CE.

As one embodiment, a name of the first MAC CE comprises BSR MAC CE.

As one embodiment, the first MAC CE is identified by a MAC subheader.

As one embodiment, the first MAC CE is identified by an LCID (Logical Channel ID) field in a MAC subheader.

As one embodiment, the first MAC CE is identified by an eLCID (extended LCID) field in a MAC subheader.

As one embodiment, the first MAC CE belongs to one MAC subPDU, and the one MAC subPDU belongs to one MAC PDU.

As one embodiment, the first MAC CE belongs to one MAC subPDU, the one MAC subPDU comprises one MAC subhead, the one MAC subhead comprises an LCID field, and the LCID field is set to any one of 59 or 60 or 61 or 62.

As one embodiment, the first MAC CE belongs to one MAC subPDU, the one MAC subPDU comprises one MAC subhead, the one MAC subhead comprises an LCID field, and the LCID field is not set to any one of 59 or 60 or 61 or 62.

As one embodiment, the first MAC CE belongs to one MAC subPDU, the one MAC subPDU comprises a MAC subhead, the one MAC subhead comprises an LCID field, and the LCID field is set to an integer not smaller than 37 and not greater than 43.

As one embodiment, the first MAC CE belongs to one MAC subPDU, the one MAC subPDU comprises one MAC subhead, the one MAC subhead comprises an eLCID field, and the eLCID field is set to an integer not smaller than 0 and not greater than 227.

As one embodiment, the first MAC CE does not comprise an LCG ID field.

As one embodiment, the first MAC CE comprises an LCG ID field.

As one embodiment, a LCGᵢ field is not included in the first MAC CE.

As one embodiment, the first MAC CE comprises a LCGᵢ field.

As one embodiment, the first MAC CE comprises a plurality of octets.

As one embodiment, the first MAC CE comprises only one octet.

As one embodiment, the first MAC CE is one octet in the first signaling.

As one embodiment, the first MAC CE is partial bits in one octet in the first signaling.

As one embodiment, the first MAC CE is two octets in the first signaling.

As one embodiment, the first MAC CE is partial bits in two octets in the first signaling.

As one embodiment, the first MAC CE comprises at least the first field.

As one embodiment, the first MAC CE only comprises the first field.

As one embodiment, the first MAC CE only comprises the first field and a reserved field.

As one embodiment, the first MAC CE comprises a reserved field.

As one embodiment, the first MAC CE does not comprise a reserved field.

As one embodiment, the reserved field refers to an R field.

As one embodiment, if the first MAC CE comprises the reserved field, the reserved field is set to any value.

As one embodiment, if the first MAC CE comprises the reserved field, the reserved field is set to 0.

As one embodiment, if the first MAC CE comprises the reserved field, the reserved field is set to 1.

As one embodiment, the first data amount is related to the first data packet set.

As one embodiment, the first time length is related to the first data packet set.

As one embodiment, both the first data amount and the first time length are related to the first data packet set.

As one embodiment, the first MAC CE comprises a first field, and the first field in the first MAC CE indicates the first data amount.

As one embodiment, the first field indicates a data amount report.

As one embodiment, the first field indicates a buffer size.

As one embodiment, the first field indicates the amount of buffered data.

As one embodiment, the first field indicates an expected data amount.

As one embodiment, the first field indicates the amount of remaining data.

As one embodiment, the first field indicates the amount of data to be transmitted.

As one embodiment, the first field is a data amount report field.

As one embodiment, the first field is a buffer size field.

As one embodiment, the first field is a data size field.

As one embodiment, the first field is a data size field, the first MAC CE comprises a buffer size field, and the data size field and the cache buffer size field are different.

As one embodiment, the first field is a data size field, the first MAC CE does not comprise a buffer size field, and the data size field and the buffer size field are different.

As one embodiment, the first data amount comprises a data amount of only one data packet set.

As one embodiment, the first data amount comprises a data amount of at least one data packet set.

As one embodiment, the first data amount comprises a data amount of the first data packet set.

As one embodiment, the first data amount comprises a data amount for at least one LCG.

As one embodiment, the first data amount comprises a data amount for at least one logical channel.

As one embodiment, the first data amount comprises a data amount for at least one QoS flow.

As one embodiment, the first data amount comprises a data amount for at least one PDCP set.

As one embodiment, the first data amount comprises a data amount for at least one PDCP set.

As one embodiment, the first data amount comprises a data amount for at least one PDU session.

As one embodiment, the first data amount comprises a data amount for only one LCG.

As one embodiment, the first data amount comprises a data amount for only one logical channel.

As one embodiment, the first data amount comprises a data amount for only one QoS flow.

As one embodiment, the first data amount comprises a data amount for only one PDCP set.

As one embodiment, the first data amount comprises a data amount for only one PDCP set.

As one embodiment, the first data amount comprises a data amount for only one PDU session.

As one embodiment, the first data amount comprises a data amount for the first identifier.

As one embodiment, the first MAC CE comprises the first identifier.

As one embodiment, the first MAC CE does not comprise the first identifier.

As one embodiment, the first MAC CE comprises a second field, and the second field in the first MAC CE indicates the first time length.

As one embodiment, the second field is an LCG ID field.

As one embodiment, the second field is set to one index, and the one index is used for indicating the first time length.

As one embodiment, the second field is set to one index, the one index is used for indicating a first time range, and the first time length belongs to the first time range.

As one embodiment, the second field is set to the first time length.

As one embodiment, the first time length is indicated to the MAC sublayer by an upper layer.

As one sub-embodiment of this embodiment, the upper layer comprises an upper layer of the PDCP sublayer.

As one sub-embodiment of this embodiment, the upper layer comprises a PDCP sublayer.

As one sub-embodiment of this embodiment, the upper layer comprises an RLC sublayer.

As one embodiment, the first time length is determined by the MAC sublayer.

As one embodiment, the first time length is determined by the first node.

As one embodiment, the first time length is related to the first data packet set.

As one embodiment, the first time length is related to a last data packet in the first data packet set.

As one embodiment, the first time length is related to a data packet having a largest SN number in the first data packet set.

As one embodiment, the first time length is related to a time budget of the first data packet set.

As one embodiment, the first time length is related to a time budget of a last data packet in the first data packet set.

As one embodiment, the first time length is related to a time budget of a data packet having a largest SN number in the first data packet set.

As one embodiment, the first time length is related to the transmission time of the first data packet set.

As one embodiment, the first time length is related to the transmission time of at least one data packet in the first data packet set.

As one embodiment, the first time length indicates a time budget of the first data packet set.

As one embodiment, the time budget refers to a time budget.

As one embodiment, the time budget refers to comprise the time allocation.

As one embodiment, the time budget refers to comprise the expected time.

As one embodiment, the time budget refers to comprise the required transmission time.

As one embodiment, the time budget refers to comprise the remaining transmission time.

### Embodiment 8

Embodiment 8 illustrates a schematic diagram of starting or restarting a first timer according to one embodiment of the present application.

For **a first node U01**, in step S8101, the expiration of a second timer is determined; in step S8102, in response to the expiration of the second timer, the first timer is started or restarted.

In Embodiment 8, in response to the expiration of the second timer, the first timer is started or restarted.

As one embodiment, the expiration of the second timer triggers the starting or restarting of the first timer.

As one embodiment, the phrase "in response to the expiration of the second timer" comprises: when the second timer expires.

As one embodiment, the phrase "in response to the expiration of the second timer" comprises: if the second timer expires.

As one embodiment, the phrase "in response to the expiration of the second timer" comprises: once the second timer expires.

As one embodiment, the phrase "in response to the expiration of the second timer" comprises: in response to receiving a second inter-layer indication at a MAC sublayer.

As one embodiment, in response to the expiration of the second timer, an inter-layer indication is sent from a PDCP sublayer to a lower layer; the second timer is a PDCP sublayer timer.

As one embodiment, in response to the expiration of the second timer, a second inter-layer indication is sent from an RLC sublayer to a lower layer; the second timer is an RLC sublayer timer.

As one embodiment, the expiration of the second timer triggers the sending of a second inter-layer indication from a PDCP sublayer to a lower layer.

As one embodiment, a MAC entity receives the second inter-layer indication.

As one embodiment, the second inter-layer indication is an indication of the expiration of the second timer from the PDCP sublayer.

As one embodiment, the second inter-layer indication indicates the expiration of the second timer.

As one embodiment, the second inter-layer indication is an indication that at least one data packet in the first data packet set from the PDCP sublayer arrives.

As one embodiment, the second inter-layer indication is related to the first data packet set.

As one embodiment, the second inter-layer indication indicates that at least one data packet in the first data packet set from the PDCP sublayer arrives.

### Embodiment 9

Embodiment 9 illustrates a schematic diagram of discarding ongoing data packets in a first data packet set according to one embodiment of the present application, as shown in FIG. 9.

For **a first node U01**, in step S9101, the expiration of a second timer is determined; in step S9102, in response to the expiration of the second timer, ongoing data packets in the first data packet set are discarded.

In Embodiment 9, in response to the expiration of the second timer, ongoing data packets in the first data packet set are discarded.

As one embodiment, the phrase "in response to the expiration of the second timer" comprises: when the second timer expires.

As one embodiment, the phrase "in response to the expiration of the second timer" comprises: if the second timer expires.

As one embodiment, the phrase "in response to the expiration of the second timer" comprises: once the second timer expires.

As one embodiment, the expiration of the second timer triggers the discarding of ongoing data packets in the first data packet set.

As one embodiment, the phrase "in response to the expiration of the second timer" comprises: when the second timer expires.

As one embodiment, the phrase "in response to the expiration of the second timer" comprises: if the second timer expires.

As one embodiment, the phrase "in response to the expiration of the second timer" comprises: once the second timer expires.

As one embodiment, the phrase "in response to the expiration of the second timer" comprises: in response to receiving the first inter-layer indication at a PDCP sublayer.

As one embodiment, the phrase "in response to the expiration of the second timer" comprises: when receiving the first inter-layer indication at the PDCP sublayer.

As one embodiment, the phrase "in response to the expiration of the second timer" comprises: if receiving the first inter-layer indication at the PDCP sublayer.

As one embodiment, the phrase "in response to the expiration of the second timer" comprises: once receiving the first inter-layer indication at a PDCP sublayer.

As one embodiment, the behavior of discarding ongoing data packets in the first data packet set comprises: discarding ongoing data packets associated with the first data packet set.

As one embodiment, in response to the expiration of the second timer, data packets that are not transmitted in the first data packet set are discarded.

As one embodiment, in response to the expiration of the second timer, data packets not sent in the first data packet set are discarded.

As one embodiment, in response to the expiration of the second timer, data packets that are not submitted in the first data packet set are discarded.

As one embodiment, in response to the expiration of the second timer, it is considered that transmission of the first data packet set fails.

As one embodiment, in response to the expiration of the second timer, it is considered that the first data packet set is not successfully completed.

As one sub-embodiment of this embodiment, the first data packet set is not successfully completed, comprising: the transmission of the first data packet set fails.

As one sub-embodiment of this embodiment, the first data packet set is not successfully completed, comprising: at least one data packet in the first data packet set is not successfully received.

### Embodiment 10

Embodiment 10 illustrates a schematic diagram of starting or restarting a first timer according to another embodiment of the present application, as shown in FIG. 10. It is particularly noted that the order in this example does not limit the order of signal transmission and the order of implementation in the present application.

For **a first node U01,** in step S10101, the second timer is started or restarted; in step S10102, the first timer is started or restarted.

In Embodiment 10, the first timer is started or restarted as the second timer is started or restarted.

As one embodiment, the step S10101 is before the step S10102.

As one embodiment, the step S10101 is after the step S10102.

As one embodiment, the behavior "with the starting or restarting the first timer as the second timer is started or restarted" comprises: starting or restarting the first timer when the second timer is started or restarted.

As one embodiment, the behavior " with the starting or restarting the first timer as the second timer is started or restarted" comprises: if the second timer is started or restarted, starting or restarting the first timer.

As one embodiment, if a condition for the second timer to be started or restarted is satisfied, the second timer is started or restarted and the first timer is started or restarted.

As one embodiment, a condition for the second timer to be started or restarted is related to the first MAC CE.

As one embodiment, a condition for the second timer to be started or restarted is related to an indication of an upper layer.

As one embodiment, along with the first MAC CE, the second timer is started or restarted and the first timer is started or restarted.

### Embodiment 11

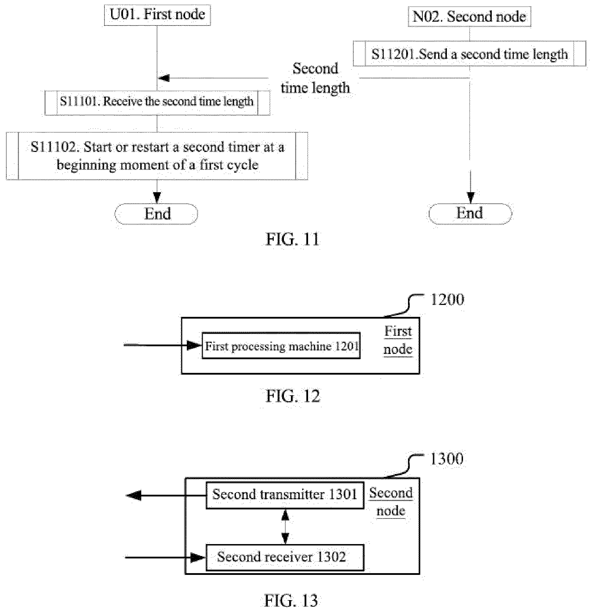

Embodiment 11 illustrates a flowchart of wireless signal transmission according to a further embodiment of the present application, as shown in FIG. 11.

For **a first node U01,** in step S11101, a second time length is received, and the second time length is used for determining the expiration time of the second timer; in step S11102, at a beginning moment of the first cycle, the second timer is started or restarted.

For **a second node N02,** in step S11201, the second time length is sent.

In Embodiment 11, the first cycle is used for determining the arrival time of at least one data packet in the first data packet set.

As one embodiment, the second time length comprises at least 1 time unit.

As one embodiment, the quantity of time units included in the second time length is configurable.

As one embodiment, an RRC field is used for configuring the second time length.

As one sub-embodiment of this embodiment, the one RRC field is a drx-onDurationTimer field.

As one sub-embodiment of this embodiment, a name of the RRC field comprises drx-onDurationTimer.

As one embodiment, "the running time of the second timer reaches the second time length value" is used for determining the expiration of the second timer.

As one embodiment, the expiration time of the second timer is the time when the running time of the second timer reaches the second time length.

As one embodiment, a time interval between the expiration time of the second timer and the time when the second timer is started or restarted is not smaller than the second time length.

As one embodiment, the second timer performs positive timing.

As one embodiment, an initial value of the second timer is 0.

As one embodiment, the second timer progressively increases from 0 after being started.

As one embodiment, the second timer counts down.

As one embodiment, an initial value of the second timer is the second time length.

As one embodiment, after the second timer is started, it progressively decreases from the second time length.

As one embodiment, "the second timer is equal to the second time length" is used for determining expiration of the second timer; the second timer performs positive timing.

As one embodiment, when the second timer is equal to the second time length, the second timer expires; the second timer performs positive timing.

As one embodiment, the second timer being equal to 0 is used for determining the expiration of the second timer; the second timer counts down.

As one embodiment, when the second timer is equal to 0, the second timer expires; the second timer counts down.

As one embodiment, the first cycle is used for determining the arrival time of one data packet in the first data packet set.

As one embodiment, the first cycle is used for determining the arrival time of one data packet in the first data packet set.

As one embodiment, the first cycle is related to an XR service.

As one embodiment, the first cycle is related to QoS.

As one embodiment, a time interval between a beginning moment of the first cycle and an ending moment of the first cycle is the second time length.

As one embodiment, a time interval between a beginning moment of the first cycle and an ending moment of the first cycle is not smaller than the second time length.

As one embodiment, a time interval of the first cycle is the second time length.

As one embodiment, a time interval of the first cycle is not smaller than the second time length.

As one embodiment, the first cycle is a DRX (System Frame Number) cycle.

As one embodiment, the first cycle is a long DRX cycle.

As one embodiment, the first cycle is a short DRX cycle.

As one embodiment, the second timer is used for determining a time interval of the first cycle.

As one embodiment, the second timer is used for determining the first cycle.

As one embodiment, the second timer is used for determining the arrival time of data packets.

As one embodiment, the second timer is used for determining the arrival time of data packets in a data packet set.

As one embodiment, the second timer is used for determining the arrival time of data packets in the first data packet set.

As one embodiment, the second timer is used for determining the arrival time of a data packet set.

As one embodiment, the second timer is used for determining the arrival time of a data packet set in a plurality of data packet sets.

As one embodiment, the second timer is used for determining the active time of DRX.

As one embodiment, the second timer is drx-onDurationTimer.

As one embodiment, a name of the second timer comprises drx-onDurationTimer.

As one embodiment, a name of the second timer comprises drx-onDurationTimer.

As one embodiment, during running of the second timer, the first node monitors a PDCCH (Physical downlink control channel) that is associated on a serving cell associated with the second timer.

As one embodiment, the time when the second timer is running belongs to the active time of a serving cell associated with the second timer.

As one embodiment, at a beginning moment of the first cycle, the second timer is set to the second time length.

As one embodiment, at a beginning moment of the first cycle, the second timer is started or restarted and the second timer is set to the second time length.

As one embodiment, a beginning moment of the first cycle is the moment when the second timer is started or restarted.

As one embodiment, a beginning moment of the first cycle is determined according to at least the SFN (System Frame Number).

As one embodiment, a beginning moment of the first cycle is determined according to at least an ending moment of the second timer.

As one embodiment, the second timer is in a running state during a time interval of the first cycle.

As one embodiment, the second timer is not restarted during a time interval of the first cycle.

As one embodiment, the first cycle is one cycle in a first candidate period set, and the first cycle in the first candidate period set is used for transmitting a first data packet in the first data packet set.

As one embodiment, the first cycle is one cycle in the first candidate period set, and a last cycle in the first candidate period set is used for transmitting a last data packet in the first data packet set.

### Embodiment 12

Embodiment 12 illustrates a structural block diagram of a processing apparatus for a first node according to one embodiment of the present application, as shown in FIG. 12. In FIG. 12, a processing apparatus 1200 in a first node comprises a first processing machine 1201.

The first processing machine 1201 receives a first expiration value; maintains a first timer; and in response to the occurrence of a first event, indicates the expiration of the first timer from a MAC sublayer to an upper layer;

In Embodiment 12, the first expiration value is used for determining the expiration time of the first timer; the behavior of maintaining the first timer comprises: starting or restarting the first timer in response to the occurrence of any event in a second event set; the second event set comprising two events, namely any MAC entity receiving a MAC SDU of a DTCH logical channel and any MAC entity sending a MAC SDU of a DTCH logical channel; and the first event comprises the expiration of the first timer.

As one embodiment, the first event depends on a state of a first data packet set.

As one embodiment, the behavior of maintaining the first timer comprises: determining a state of the first timer according to a state of the first data packet set.

As one embodiment, the first processing machine 1201 receives a second expiration value; wherein the second expiration value is used for determining the expiration time of the first timer; the behavior of determining a state of the first timer according to the state of the first data packet set comprises: determining whether the first timer is set to the first expiration value or the second expiration value according to the state of the first data packet set.

As one embodiment, a state of the first data packet set depends on the state of the second timer; the phrase "the state of the first data packet set depends on a state of the second timer" comprises: the second timer being running is used for determining that the first data packet set is in progress; and the second timer being not running is used for determining that the first data packet set is not in progress.

As one embodiment, the first processing machine 1201 sends a first MAC CE; wherein the first MAC CE indicates a first data amount and a first time length.

As one embodiment, with the first MAC CE, the second timer is started or restarted.

As one embodiment, the second timer is used for setting the first time length.

As one embodiment, the first processing machine 1201 starts or restarts the first timer in response to the expiration of the second timer.

As one embodiment, the first processing machine 1201 discards ongoing data packets in the first data packet set in response to the expiration of the second timer.

As one embodiment, the first processing machine 1201 starts or restarts the first timer as the second timer is started or restarted.

As one embodiment, the first processing machine 1201 receives a second time length, the second time length being used for determining the expiration time of the second timer; the first processing machine 1201 starts or restarts the second timer at a beginning moment of the first cycle;
wherein the first cycle is used for determining the arrival time of at least one data packet in the first data packet set.

As one embodiment, the first processing machine 1201 comprises a first receiver.

As one embodiment, the first processing machine 1201 comprises a first transmitter.

As one embodiment, the first processing machine 1201 comprises a first receiver and a first transmitter.

As one embodiment, the first receiver receives the first expiration value.

As one embodiment, the first receiver receives the second expiration value.

As one embodiment, the first receiver receives the second time length.

As one embodiment, the first transmitter sends the first MAC CE.

As one embodiment, the first receiver comprises an antenna 452, a receiving device 454, a multi-antenna receiving processor 458, a receiving processor 456, a controller/processor 459, a memory 460 and a data source 467 in FIG. 4 of the present application.

As one embodiment, the first receiver comprises an antenna 452, a receiving device 454, a multi-antenna receiving processor 458, and a receiving processor 456 in FIG. 4 of the present application.

As one embodiment, the first receiver comprises an antenna 452, a receiving device 454, and a receiving processor 456 in FIG. 4 of the present application.

As one embodiment, the first transmitter comprises an antenna 452, a transmitting device 454, a multi-antenna transmitting processor 457, a transmitting processor 468, a controller/processor 459, a memory 460, and a data source 467 in FIG. 4 of the present application.

As one embodiment, the first transmitter comprises an antenna 452, a transmitting device 454, a multi-antenna transmitting processor 457, and a transmitting processor 468 in FIG. 4 of the present application.

As one embodiment, the first transmitter comprises an antenna 452, a transmitting device 454, and a transmitting processor 468 in FIG. 4 of the present application.

### Embodiment 13

Embodiment 13 illustrates a structural block diagram of a processing apparatus used in a second node according to one embodiment of the present application, as shown in FIG. 13. In FIG. 13, a processing apparatus 1300 in the second node comprises a second transmitter 1301 and a second receiver 1302.

The second transmitter 1301 sends a first expiration value;

In Embodiment 13, a recipient of the first expiration value maintains a first timer; in response to the occurrence of a first event, the recipient of the first expiration value indicates the expiration of the first timer from a MAC sublayer to an upper layer; the first expiration value is used for determining expiration time of the first timer; wherein the behavior of the recipient of the first expiration value maintaining the first timer comprises: the recipient of the first expiration value starting or restarting the first timer in response to the occurrence of any event in a second event set; the second event set comprising two events, namely any MAC entity receiving a MAC SDU of a DTCH logical channel and any MAC entity sending a MAC SDU of a DTCH logical channel; and the first event comprises the expiration of the first timer.

As one embodiment, the first event depends on a state of a first data packet set.

As one embodiment, the behavior of a recipient of the first expiration value maintaining the first timer comprises: the recipient of the first expiration value determining a state of the first timer according to a state of the first data packet set.

As one embodiment, the second transmitter 1301 sends a second expiration value; wherein the second expiration value is used for determining the expiration time of the first timer; the behavior of determining a state of the first timer according to the state of the first data packet set comprises: determining whether the first timer is set to the first expiration value or the second expiration value according to the state of the first data packet set.

As one embodiment, a state of the first data packet set depends on the state of the second timer; the phrase "the state of the first data packet set depends on a state of the second timer" comprises: the second timer being running is used for determining that the first data packet set is in progress; and the second timer being not running is used for determining that the first data packet set is not in progress.

As one embodiment, the second receiver 1302 receives a first MAC CE; wherein the first MAC CE indicates a first data amount and a first time length.

As one embodiment, as the first MAC CE is received, a recipient of the first expiration value starts or restarts the second timer.

As one embodiment, the second timer is used for setting the first time length.

As one embodiment, in response to expiration of the second timer, a recipient of the first expiration value starts or restarts the first timer.

As one embodiment, in response to expiration of the second timer, a recipient of the first expiration value discards ongoing data packets in the first data packet set.

As one embodiment, a recipient of the first expiration value starts or restarts the first timer as the second timer is started or restarted.

As one embodiment, the second transmitter 1301 sends a second time length, the second time length being used for determining the expiration time of the second timer; wherein, at a beginning moment of the first cycle, a recipient of the first expiration value starts or restarts the second timer; the first cycle is used for determining the arrival time of at least one data packet in the first data packet set.

As one embodiment, the second transmitter 1301 comprises an antenna 420, a transmitting device 418, a multi-antenna transmitting processor 471, a transmitting processor 416, a controller/processor 475, and a memory 476 in FIG. 4 of the present application.

As one embodiment, the second transmitter 1301 comprises an antenna 420, a transmitting device 418, a multi-antenna transmitting processor 471, and a transmitting processor 416 in FIG. 4 of the present application.

As one embodiment, the second transmitter 1301 comprises an antenna 420, a transmitting device 418, and a transmitting processor 416 in FIG. 4 of the present application.

As one embodiment, the second receiver 1302 comprises an antenna 420, a receiving device 418, a multi-antenna receiving processor 472, a receiving processor 470, a controller/processor 475, and a memory 476 in FIG. 4 of the present application.

As one embodiment, the second receiver 1302 comprises an antenna 420, a receiving device 418, a multi-antenna receiving processor 472, and a receiving processor 470 in FIG. 4 of the present application.

As one embodiment, the second receiver 1302 comprises an antenna 420, a receiving device 418, and a receiving processor 470 in FIG. 4 of the present application.

Those skilled in the art will appreciate that all or some of the steps in the above-mentioned method may be implemented by instructing relevant hardware by a program, where the program can be stored in a computer-readable storage medium, such as a read-only memory, a hard disk or an optical disk, etc. Optionally, all or some of the steps of the above-mentioned embodiments may also be implemented using one or more integrated circuits. Correspondingly, each module unit in the above-mentioned embodiment can be implemented either in a hardware form or as software functional modules. The present application is not limited to any specific combination form of hardware and software. User equipment, terminals and UE in the present application include, but not limited to wireless communication devices such as drones, communication modules on drones, remote-controlled aircraft, flying machines, small aircraft, mobile phones, tablet computers, notebook computers, vehicle communication devices, wireless sensors, data cards, Internet of Things terminals, RFID terminals, NB-IOT terminals, MTC (Machine Type Communication) terminals, eMTC(enhanced MTC)terminals, data cards, data cards, vehicle communication devices, low-cost mobile phones, and low-cost tablet computers. A base station or system equipment in the present application includes, but is not limited to, wireless communication devices such as macro cellular base stations, micro cellular base stations, home base stations, relay base stations, gNB (NR Node B) NR Node B, and TRPs (Transmitter Receiver Points).

The above represents only preferred embodiments of the present application and is not intended to limit the scope of protection of the present application. Any modifications, equivalent substitutions, improvements and the like made within the spirit and principles of the present application shall be included within the scope of protection of the present application.

## Claims

1. A first node used for wireless communication, comprising:
a first processing machine receiving a first expiration value; maintaining a first timer; and in response to the occurrence of a first event, indicating expiration of the first timer from a MAC sublayer to an upper layer;
wherein the first expiration value is used for determining the expiration time of the first timer; the behavior of maintaining the first timer comprises: starting or restarting the first timer in response to the occurrence of any event in a second event set, the second event set comprises two events, namely any MAC entity receiving a MAC SDU of a DTCH logical channel and any MAC entity sending a MAC SDU of a DTCH logical channel; the first event comprises the expiration of the first timer; the first event depends on a state of a first data packet set, or, the behavior of maintaining the first timer comprises: determining a state of the first timer according to the state of the first data packet set.

2. The first node according to claim 1, comprising:
the first processing machine receiving a second expiration value;
wherein the second expiration value is used for determining the expiration time of the first timer; the behavior of determining a state of the first timer according to the state of the first data packet set comprises: determining whether the first timer is set to the first expiration value or the second expiration value according to the state of the first data packet set.

3. The first node according to claim 1 or 2, wherein the state of the first data packet set depends on a state of the second timer; the phrase "the state of the first data packet set depends on a state of the second timer" comprises: the second timer being running is used for determining that the first data packet set is in progress; and the second timer being not running is used for determining that the first data packet set is not in progress.

4. The first node according to claim 3, comprising:
the first processing machine sending a first MAC CE; and starting or restarting the second timer along with the first MAC CE;
wherein the first MAC CE indicates a first data amount and a first time length.

5. The first node according to claim 3 or 4, comprising:
the first processing machine starting or restarting the first timer in response to the expiration of the second timer.

6. The first node according to any one of claims 3 to 5, comprising:
the first processing machine discarding ongoing data packets in the first data packet set in response to the expiration of the second timer.

7. The first node according to any one of claims 3 to 6, comprising:
the first processing machine starting or restarting the first timer as the second timer is started or restarted.

8. The first node according to any one of claims 3 to 7, comprising:
the first processing machine receiving a second time length, the second time length being used for determining the expiration time of the second timer; and starting or restart the second timer at a beginning moment of a first cycle;
wherein the first cycle is used for determining the arrival time of at least one data packet in the first data packet set.

9. A second node used for wireless communication, comprising:
a second transmitter sending a first expiration value;
wherein a recipient of the first expiration value maintains a first timer; and in response to the occurrence of a first event, the recipient of the first expiration value indicates expiration of the first timer from a MAC sublayer to an upper layer; the first expiration value is used for determining the expiration time of the first timer; the behavior of a recipient of the first expiration value maintaining the first timer comprises: the recipient of the first expiration value starting or restarting the first timer in response to the occurrence of any event in a second event set; the second event set comprises two events, namely any MAC entity receiving a MAC SDU of a DTCH logical channel and any MAC entity sending a MAC SDU of a DTCH logical channel; the first event comprises the expiration of the first timer; the first event depends on a state of a first data packet set, or, the behavior of the recipient of the first expiration value maintaining the first timer comprises: the recipient of the first expiration value determining a state of the first timer according to the state of the first data packet set.

10. A method used in a first node for wireless communication, comprising:
receiving a first expiration value; maintaining a first timer; and in response to the occurrence of a first event, indicating expiration of the first timer from a MAC sublayer to an upper layer;
wherein the first expiration value is used for determining the expiration time of the first timer; the behavior of maintaining the first timer comprises: starting or restarting the first timer in response to the occurrence of any event in a second event set, the second event set comprises two events, namely any MAC entity receiving a MAC SDU of a DTCH logical channel and any MAC entity sending a MAC SDU of a DTCH logical channel; the first event comprises the expiration of the first timer; the first event depends on a state of a first data packet set, or, the behavior of maintaining the first timer comprises: determining a state of the first timer according to the state of the first data packet set.

11. A method used in a second node for wireless communication, comprising:
sending a first expiration value,
wherein a recipient of the first expiration value maintains a first timer; and in response to the occurrence of a first event, the recipient of the first expiration value indicates expiration of the first timer from a MAC sublayer to an upper layer; the first expiration value is used for determining the expiration time of the first timer; the behavior of a recipient of the first expiration value maintaining the first timer comprises: the recipient of the first expiration value starting or restarting the first timer in response to the occurrence of any event in a second event set; the second event set comprising two events, namely any MAC entity receiving a MAC SDU of a DTCH logical channel and any MAC entity sending a MAC SDU of a DTCH logical channel; the first event comprises the expiration of the first timer; the first event depends on a state of a first data packet set, or, the behavior of the recipient of the first expiration value maintaining the first timer comprises: the recipient of the first expiration value determining a state of the first timer according to the state of the first data packet set.
